(19)

**Europäisches Patentamt**

**European Patent Office**

**Office européen des brevets**

(11)  **EP 4 664 311 A1**

(12)  **EUROPEAN PATENT APPLICATION**

(43) Date of publication:
17.12.2025 Bulletin 2025/51

(21) Application number: 25182453.8

(22) Date of filing: 12.06.2025

(51) International Patent Classification (IPC):
*G06F 16/22* (2019.01)      *G06F 16/51* (2019.01)

(52) Cooperative Patent Classification (CPC):
G06F 16/51; G06F 16/2228

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024   US 202418743275**

(71) Applicant: **Microsoft Technology Licensing, LLC**
**Redmond, WA 98052-6399 (US)**

(72) Inventors:
• **RAVI, Rajath Kumar**
  **Redmond, 98052-6399 (US)**
• **WAGLE, Justin James**
  **Redmond, 98052-6399 (US)**
• **SENGUPTA, Sunando**
  **Redmond, 98052-6399 (US)**
• **SOMMERLADE, Eric Chris Wolfgang**
  **Redmond, 98052-6399 (US)**

(74) Representative: **Page White Farrer**
**Bedford House**
**21a John Street**
**London WC1N 2BF (GB)**

(54)  **PRODUCING AND USING A GRAPH NEURAL NETWORK THAT REPRESENTS RELATIONSHIPS AMONG SCREENSHOTS**

(57)    A graph-forming process generates a graph having nodes that represent a plurality of previously captured screenshots. The graph-forming process relies on a plurality of machine-trained models to identify edges between pairs of the nodes. The edges represent relationships among the screenshots. The graph-forming process then trains a graph neural network (GNN) based on the graph. The training produces a plurality of target embeddings associated with respective nodes in the graph. A retrieval process retrieves a previously captured screenshot using the plurality of target embeddings. The retrieval process involves adding a new node to the graph that represents the query and using the GNN to produce a query embedding associated with the new node. The retrieval process then finds at least one target embedding that matches the query embedding and retrieves a screenshot associated with the matching target embedding.

FIG. 1

EP 4 664 311 A1

**Description**

**BACKGROUND**

Users sometimes manually capture screenshots and then make later reference to these screenshots. However, the process of manually retrieving a previously captured screenshot is cumbersome, time-consuming, and prone to error. Further, the process of manually searching through previously captured screenshots consumes a significant amount of memory and processing resources of a local device. These challenges are exacerbated in those cases in which a relatively large number of screenshots are captured.

**SUMMARY**

A graph-forming process is described herein for generating a graph that represents a plurality of previously captured screenshots. The graph-forming process trains a graph neural network (GNN) based on the graph. The training produces a plurality of target embeddings that are associated with respective nodes in the graph, which, in turn, represent respective screenshots.

A retrieval process is also described herein for retrieving a previously captured screenshot. The retrieval process involves adding a new node to the graph that represents the query and using the GNN to produce a query embedding associated with the new node. The retrieval process then finds at least one target embedding that matches the query embedding (e.g., an ordered list of target embeddings that match the query embedding) and retrieves a screenshot associated with each matching target embedding.

According to one illustrative aspect, the graph-forming process uses a plurality of machine-trained models to generate features. The features are used to determine what edges are to be added to the graph. In some implementations, the graph-forming process creates a plurality of different types of edges.

According to another illustrative aspect, the graph-forming process involves transforming a screenshot-centric graph into an expanded graph that also includes nodes that represent entities (people, topics, activities, products, etc.). At least in part, the graph-forming process identifies the entities based on the features produced by the machine-trained models.

According to another illustrative aspect, the graph-forming process produces the GNN by first producing a pretrained model based on a general collection of images and associated instances of text. The graph-forming process then finetunes the pretrained model based on a collection of screenshots and associated instances of text, to produce a finetuned model. In some implementations, pretraining and finetuning are performed by a network-accessible computing system. The graph-forming process then transfers the finetuned model to a local computing device. The local computing device uses the finetuned model to produce the target embeddings based on local screenshots captured by the local computing device.

The above-summarized processes provide an efficient mechanism for organizing screenshots and subsequently retrieving screenshots of interest. Different applications can also use the graph to provide insight regarding actions that have been performed using a local computing device. The process of training the graph neural network is also scalable because it allows each local computing device to produce target embeddings that represent local screenshots captured by the local computing device, without requiring the local computing device to perform the most resource-intensive parts of the training. Instead, this training is performed by the network-accessible computing system.

The above-summarized technology is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

**BRIEF DESCRIPTION OF DRAWINGS**

Fig. 1 shows a graph-forming system for producing a graph and for generating a graph neural network (GNN) based on the graph. Fig. 1 also shows a retrieval system for retrieving screenshots based on target embeddings produced by the GNN.

Fig. 2 shows an illustrative process for capturing and storing screenshots by a local computing device.

Fig. 3 shows a process by which a partitioning model partitions an illustrative screenshot into one or more text regions and one or more image regions.

Fig. 4 shows an illustrative screenshot.

Fig. 5 shows a plurality of machine-trained models used by the graph-forming system of Fig. 1.

Fig. 6 shows an illustrative portion of a graph created by the graph-forming system of Fig. 1.

Fig. 7 shows functionality used by a GNN-training system of Fig. 1 to train the GNN.

Fig. 8 shows an example of training performed by the functionality of Fig. 7.

Fig. 9 shows functionality for producing a pretrained model, and for finetuning the pretrained model to produce the GNN used by the systems of Fig. 1.

Fig. 10 shows an example of the pretraining performed by the functionality of Fig. 9.

Fig. 11 shows a system for integrating the type of screenshot-centric graph shown in Fig. 6 with a more inclusive graph that represents individual entities.

Fig. 12 shows one implementation of the retrieval system introduced in Fig. 1.

Fig. 13 shows an example of the operation of the retrieval system of Fig. 12.

Fig. 14 shows an illustrative language model for implementing various machine-trained models shown in Fig. 5.

Fig. 15 shows an illustrative convolutional neural network for implementing various machine-trained models shown in Fig. 5.

Fig. 16 shows one implementation of a partitioning model that performs the type of partitioning shown in Fig. 3.

Fig. 17 shows candidate regions that are considered in the processing performed by the partitioning model of Fig. 16.

Fig. 18 is a flowchart that provides an overview of one manner of operation of the graph-forming system of Fig. 1.

Fig. 19 is a flowchart that provides an overview of the use of pretraining and finetuning in Fig. 9.

Fig. 20 is a flowchart that provides an overview of one manner of operation of the retrieval system of Fig. 12.

Fig. 21 shows computing equipment that, in some implementations, is used to implement the systems of Fig. 1.

Fig. 22 shows an illustrative type of computing system that, in some implementations, is used to implement any aspect of the features shown in the foregoing drawings.

The same numbers are used throughout the disclosure and figures to reference like components and features.

## DETAILED DESCRIPTION

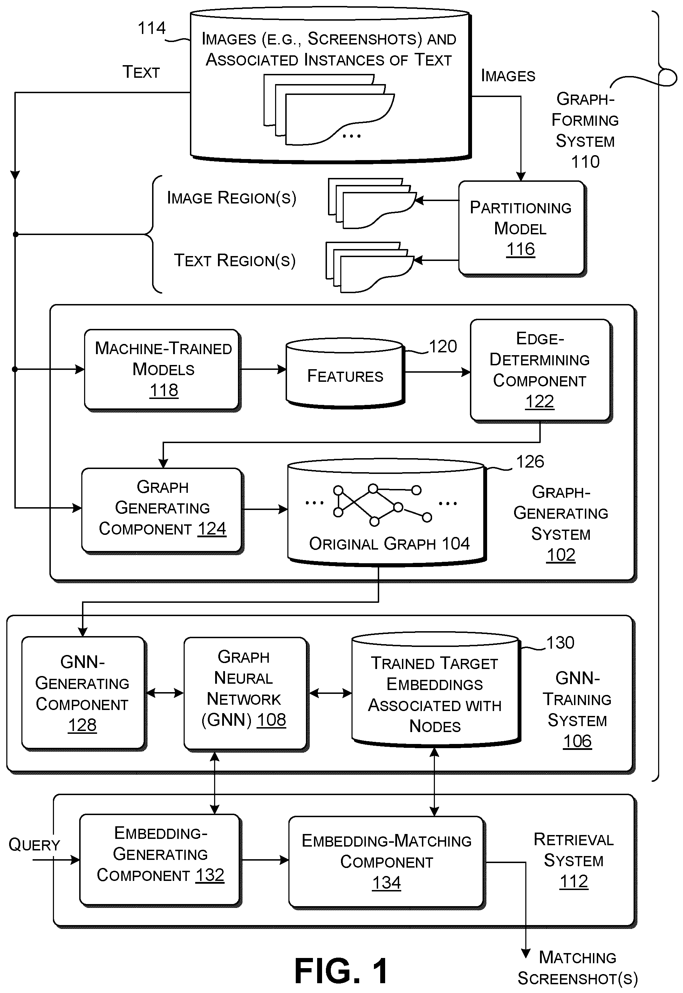

Fig. 1 shows a graph-generating system 102 for producing a screenshot graph 104 (or "graph" for brevity). The graph 104 includes nodes that represent a plurality of screenshots and associated instances of text. The graph 104 expresses relationships among the nodes with edges. Fig. 1 also shows a GNN-training system 106 that generates a graph neural network based (GNN) 108 based on the graph 104. A graph-forming system 110 includes the graph-generating system 102 and the GNN-training system 106. Fig. 1 also shows a retrieval system 112 for retrieving screenshots based on target embeddings produced by the GNN 108.

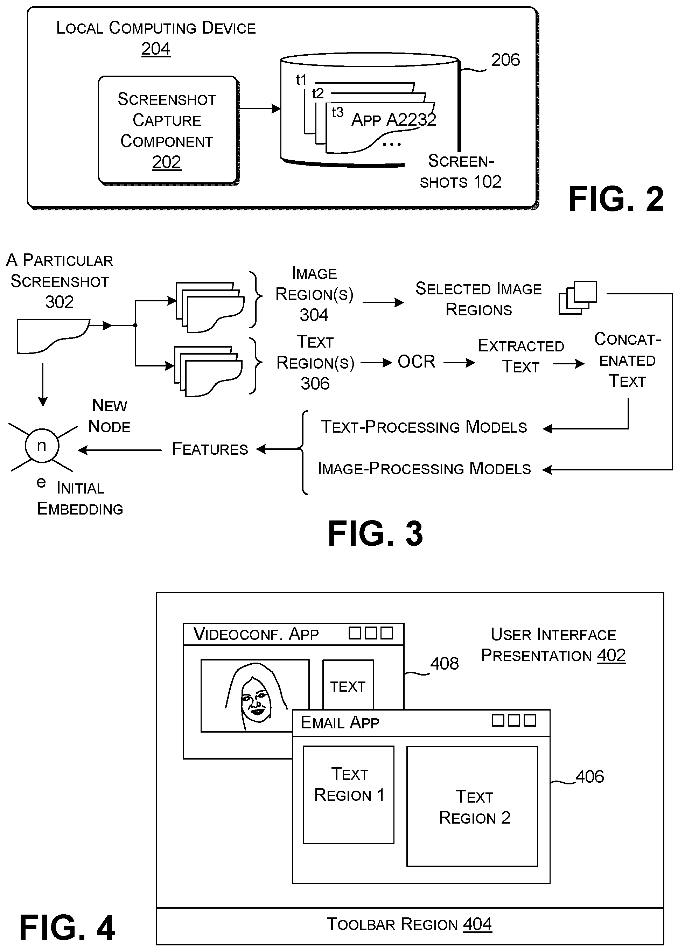

Section A provides an overview of the systems shown in Fig. 2. Section B describes the graph-generating system 102. Section C describes the GNN-training system 106. Section D describes a system for transforming the graph 104 into a modified graph having nodes associated with entities expressed in the screenshots. Section E describes the retrieval system 112. Section F describes illustrative machine-trained models for use in the graph-generating system 102 of Fig. 1. Section G sets forth illustrative processes that explain the operation of the graph-forming system 110 described in Section A and the GNN-training system 106 described in Section B. Section H sets forth illustrative computing functionality for implementing the features of the foregoing sections.

## A. Overview of the Systems of Fig. 1

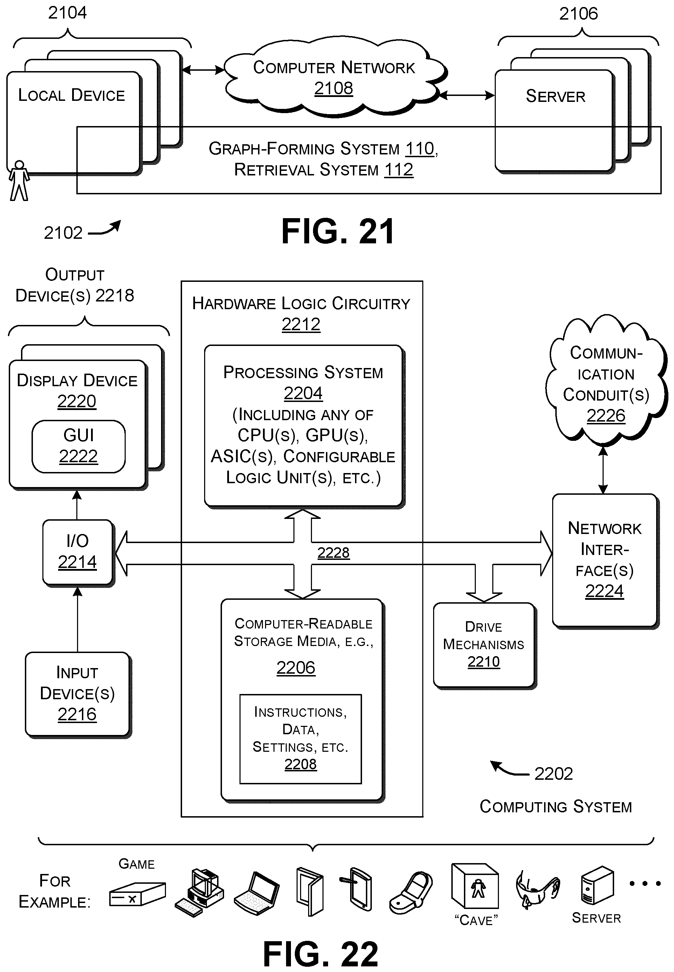

The systems shown in Fig. 1 will be set forth below in a generally top-down manner. The following terminology is relevant to some examples presented below. A "machine-trained model" or "model" refers to computer-implemented logic for executing a task using machine-trained parameters that are produced in a training operation. A parameter refers to any type of parameter value (e.g., a weight or a bias value) that is iteratively produced by the training operation. A window is a user interface panel by which a user interacts with an application or other logic. In some contexts, terms such as "component," "module," "engine," and "tool" refer to parts of computer-based technology that perform respective functions. Figs. 21 and 22, described below, provide examples of illustrative computing equipment for performing these functions.

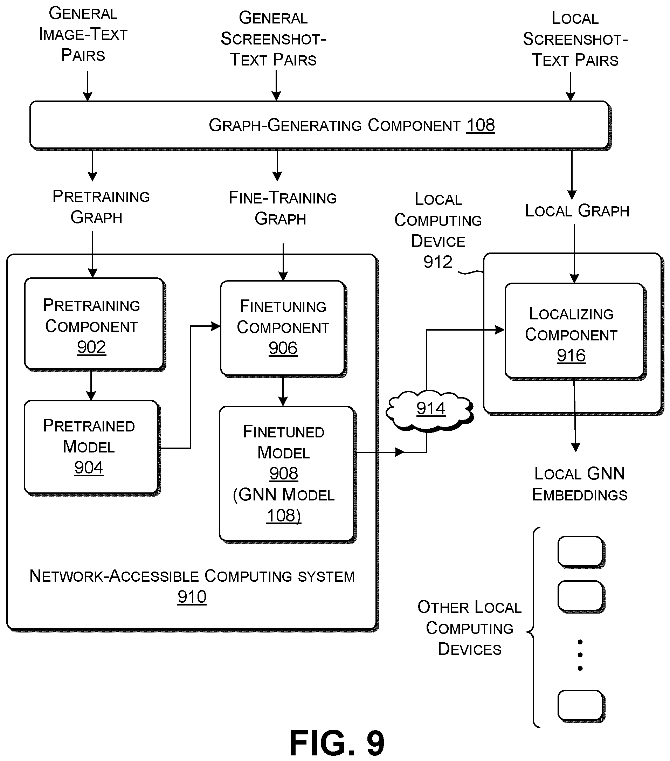

The composition of the screenshots and instances of text will be described in detail below with reference to Figs. 2 and 9. As a preview of that later explanation, some implementations of systems described herein produce the GNN 108 in a series of stages. In a first stage, the GNN-training system 106 performs training on a general set of images and associated instances of text. This yields a pretrained model. At this stage, the images are not necessarily screenshot images. Further, the images originate from any source(s), and do not necessarily originate from a single local computing device. For example, the images are scraped from the World Wide Web, and the instances of text correspond to captions associated with those images or queries submitted to a search engine to retrieve the images.

In a second stage, the GNN-training system 106 finetunes the pretrained model based on a collection of screenshots and associated instances of text, to produce a finetuned model. The screenshots originate from any source(s). For example, the screenshots are collected from plural local computing devices that locally capture the screenshots during the use of the local computing devices.

In a third stage, a local computing device applies the finetuned model to generate a plurality of screenshot embeddings based on a collection of screenshots and associated instances of text that are captured by the local computing device (or plural affiliated local computing devices). The local computing device then applies a local instantiation of the retrieval system 112 to retrieve local screenshots of interest in response to the submission of queries.

Fig. 1 simplifies the above-described three-stage process by showing that training is performed based on a data store 114 of images and associated instances of instances of text. In the explanation of Fig. 1, it will be assumed that the images are screenshots captured by one or more local computing devices. As noted above, however, in the first stage, the images are generic images. In another implementation, the GNN-training system 106 does indeed train the GNN 108 in a single stage based on a single corpus of screenshots produced by a single local computing device or plural local computing devices.

In some implementations, a screenshot capture component captures an entirety of content presented by a local computing device on a user interface presentation at a particular time. Alternatively, the screen capture component captures only part of a user interface presentation that is less than the entirety of the user interface presentation. For example, the screenshot capture component can capture just the active window presented on the user interface presentation. The active window presents the application or other functionality with which the user is currently interacting. Each instance of text includes one or more words that describe or otherwise pertain to a particular screenshot. For example, an instance of text includes words that appear in a particular screenshot. In another example, an instance of text is a query that was previously used to retrieve the particular screenshot, or some other supplemental description of the screenshot.

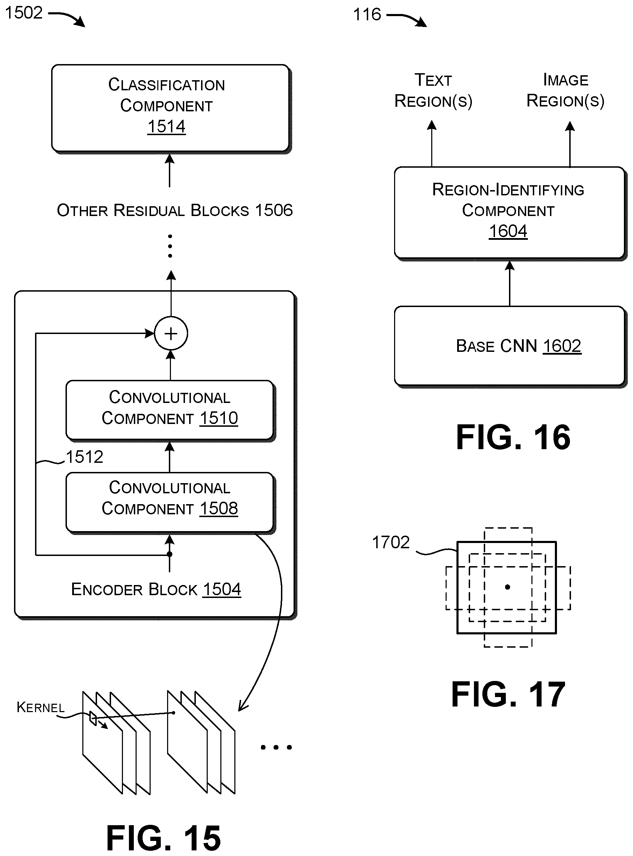

A partitioning model 116 of the graph-forming system 110 partitions each screenshot (or general-purpose image) into zero, one, or more non-text image regions and zero, one, or more text-bearing image regions. A non-text image region is a region that includes any content that is not expressed in alphanumeric form, such as a picture, a graph, a logo, a chart, or graphical content. Each text-bearing image region is an image region that includes text content. An optical character recognition (OCR) engine (not shown) extracts the text from each text-bearing image region. In some implementations, the partitioning model 116 is convolutional neural network (CNN) having region detection capabilities. Examples of this type of partitioning functionality are provided below in the context of the explanation of Figs. 16 and 17.

For brevity, each non-text image region is referred to below as an image region. Each text-bearing image region is referred to below as a text region. However, it should be understood that a text region is also expressed as an image in its original form, meaning that it is just another part of the image captured by a screenshot capture component. Further note that the partitioning model 116 classifies any given region that is associated with a particular bounding box as either an image region or a text region. However, it is possible that an image region overlaps with a text region, and vice versa. The ultimate purpose of discriminating between image regions and text regions is that pixel-level analysis is applied to image regions and text-level analysis is applied to text regions.

The graph-generating system 102 uses plural machine-trained models 118 to generate a plurality of features that describe the screenshots (or general-purpose images). A data store 120 stores the features. In some cases, a feature represents distributed vector information that describes a screenshot. For example, an image embedding-generating model maps the image content of a screenshot into a distributed vector that describes the screenshot. A text embedding-generating model maps the text content of a screenshot into a distributed vector that describes the screenshot. A distributed vector is a vector that distributes its information over its $k$ dimensions, as opposed to one-hot vector that allocates particular dimensions to particular concepts.

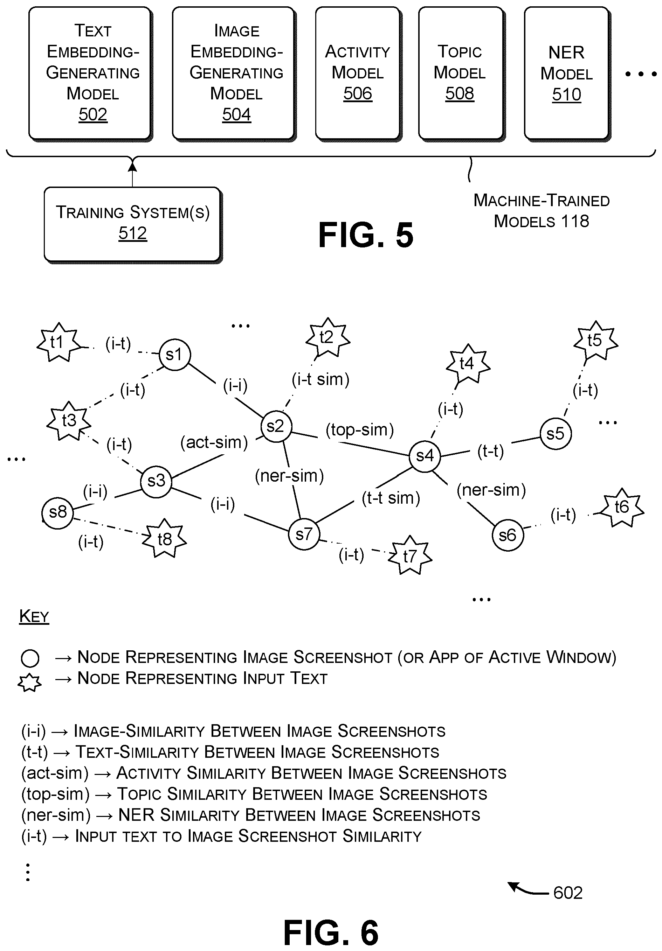

In other cases, a feature represents classification results applied to a screenshot. For example, a named entity recognition (NER) model identifies named entities that are mentioned in the text content of a screenshot. A named entity is a particular place person, object, product, topic, activity location, etc., often associated with a proper noun. An activity model identifies a type of activity to which a screenshot pertains based on image content and/or text content of the screenshot. Illustrative activities include browsing, coding, document editing, conducting a meeting, etc. For example, assume that the screenshot includes an active window in which the user is interacting with a videoconferencing application. The activity model classifies the screenshot as pertaining to meeting-related activity. A topic model identifies one or more topics to which the screenshot pertains based on image and/or text content of the screenshot. Other implementations include additional models, such as a model that discriminates between work-related activities and personal activities. Alternatively, or in addition, other implementations omit one more of the models described above. Additional details regarding the implementations of these models are provided below in the context of the explanation of Figs. 5 and 14-17.

An edge-determining component 122 identifies relationships among the screenshots based on the features produced by the machine-trained models 118. That is, for each type of feature that has been captured, the edge-determining component 122 determines whether there is prescribed degree of commonality between each pairing of screenshots. For example, the edge-determining component 122 determines the distance between a first image embedding (associated with a first screenshot) and a second image embedding (associated with a second screenshot), and then compares the distance with a prescribed threshold value to determine whether there is a prescribed degree of image similarity between the first and second screenshots. The edge-determining component 122 performs the same operation with respect to text embeddings to determine whether there is a prescribed degree of text similarity between the first and second screenshots. The edge-determining component 122 determines that there is a NER-related similarity between the first and second screenshots if these two screenshots have at least one common entity name. The edge-determining component 122 performs the same operation to assess topic similarity and activity similarity between the two screenshots. The edge-determining component 122 relies on any combination of techniques to assess similarity, including edit distance (e.g., for NER-based similarity), cosine similarity (e.g., for image similarity and text similarity), etc.

A graph-generating component 124 produces the graph 104 based on the determinations made by the above-described processing. That is, the graph-generating component 124 assigns a screenshot node to each screenshot. The graph-generating component 124 also associates each node in the graph 104 with an initial embedding. In some implementations, the initial embedding is a image embedding produced by the embedding-generating model and/or a text embedding produced by the text embedding-generating model. For example, the initial embedding is a combination (a concatenation, a sum, an average, etc.) of the image embedding and the text embedding.

The graph-generating component 124 assigns an edge between any pair of nodes associated with screenshots that have a prescribed similarity, as assessed by the edge-determining component 122. More specifically, the graph-generating component 124 produces different edge types for different types of relationships. For example, the graph-generating component 124 produces a first type of edge if two screenshots mention the same named entity. The graph-generating component 124 produces a second type of edge if two screenshots pertain to a same activity, and so on. A data store 126 stores the resultant graph 104.

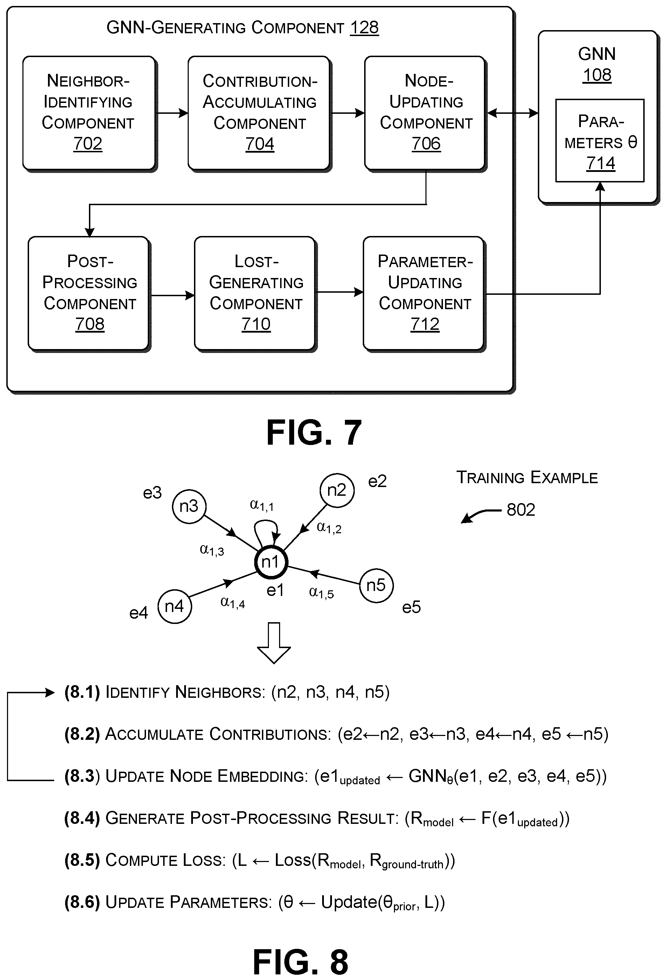

A GNN-generating component 128 of the GNN-training system 106 processes the graph 104 to train the GNN 108. One implementation of this process will be described below in connection with Figs. 7-10. As a preview of that later explanation, consider a particular node that is associated with an initial embedding. The training involves: identifying neighbor nodes of the node under consideration; accumulating embeddings associated with the neighbor nodes; and producing an updated embedding for the node under consideration based on the accumulated embeddings. At the completion of training, each node of the graph will include a transformed embedding, referred to herein as a target embedding. The GNN-training system 106 stores the target embeddings in a data store 130.

The retrieval system 112 operates by receiving a query. The query specifies an objective of a search using text and/or image content. The retrieval system 112 first uses the graph-generating system 102 to determine features associated with the query, and then, based on the features, to determine relationships between the query and one or more existing nodes in the graph 104. As a result of this determination, the retrieval system 112 adds a new node to the graph 104 with edges that connected the new node to the one or more existing nodes that have been identified. This new node is referred to herein as the query node. The retrieval system 112 assigns an initial embedding to the query mode, corresponding to the text embedding produced by the text embedding-generating model and/or an image embedding produced by the image embedding-generating model. For example, the initial embedding is a combination (concatenation, sum, average, etc.) of the text embedding and image embedding. An embedding-generating component 132 then relies on the GNN-generating component 128 to produce a query embedding associated with the query node. The GNN-generating component 128 performs this task using the process summarized above.

An embedding-matching component 134 identifies one or more previously stored target embeddings in the data store 130 that match the query embedding. In some cases, the embedding-matching component 134 determines an extent to which the query embedding matches a candidate target item embedding using the cosine similarity metric. In addition, the embedding-matching component 134 uses any vector search algorithm to search the target item embeddings, such as a K-nearest neighbor (KNN) technique or an approximate nearest neighbor (ANN) technique. In some implementations, the embedding-matching component 124 produces an ordered list of target embeddings that match the query embedding. The embedding-matching component 124 can use any similarity metric to perform this ordering, such as cosine similarity.

The retrieval system 112 then retrieves whatever screenshot is associated with each matching target embedding, based on an index entry that links the matching target embedding with a particular screenshot. In some implementations, the retrieval system 112 generates an output presentation that shows the retrieved screenshot or information extracted therefrom.

The systems shown in Fig. 1 provide a resource-efficient approach to storing and retrieving screenshots. That is, the systems consume less memory and processor resources compared to an alternative approach of relying on a user to manually search through a collection of screenshots. This is because the process of manually searching through a collection of screenshots involves plural ad hoc user interface and retrieval actions, each of which consumes resources. The technique also reduces the amount of time and effort that is required to retrieve a screenshot. These advantages are amplified in those circumstances in which a relatively large number of screenshots have been captured. This is the case here because, as will be described below, a screenshot capture mechanism captures a plurality of screenshots every minute, resulting in the storage of a relatively large number of screenshots over the course of a session.

In some implementations, one or more computing devices use one or more graphics processing units (GPUs) and/or one or more neural processing units (NPUs) to efficiently and expeditiously perform at least aspects of the operations shown in Fig. 1.

## B. The Graph-Generating System

Fig. 2 shows a screenshot capture component 202 for capturing screenshots by a single local computing device 204 and storing the screenshots in a data store 206. The local computing device 204 corresponds to any type of processing device, such as a desktop computing device or any type of mobile computing device (e.g., smartphone). Additional examples of local computing devices are listed below in context of the explanation of Fig. 21.

In some implementations, the screenshot capture component 202 is implemented using the operating system of the local computing system 204. Assume that, at a current time, the operating system is presenting a frame of information stored in memory on a display device of any type (not shown). When presented, that frame of information provides a user interface presentation in a prescribed state. In response to a print screen command, the operating system stores a copy of this frame of information in the data store 206, e.g., using a JPEG, PNP, raw image, or any other format. In some implementations, the screen capture component 202 also stores metadata pertaining to the screenshot. For example, the screen capture component 202 stores the name of the application (or other functionality) that is presenting content in the active window of the user interface presentation (if, fact, there is any active window that is open). The screen capture component 202 also stores the time at which the screenshot was captured.

In some implementations, the screenshot capture component 202 captures screenshots at regular intervals of time, e.g., by capturing 5 to 20 screenshots per minute. Alternatively, or in addition, the screenshot capture component 202 captures screenshots on an event-driven basis. For example, the screenshot capture component 202 captures a screenshot when a window is opened or closed, and when the active window is updated for any reason (e.g., in response to a user action or an application-driven event). In some implementations, the above capture settings result in the storage of a relatively large number of screenshots during a computing session, e.g., thousands of images per day. In some implementations, the screenshot capture component 202 compresses the screenshots prior to storage, e.g., using a video compression standard, such as H.264.

Fig. 3 shows one way in which the graph-forming system 110 partitions the contents of a particular screenshot 302. Assume that the particular screenshot 302 initially represents the entirely of the contents presented on a user interface presentation at a current time. First, the partitioning model 116 detects zero, one, or more image regions 304 in the screenshot 302 and zero, one, or more text regions 306. The graph-forming system 110 then selects one or more of the image regions 304 for further analysis by the machine-trained models 118. For example, in a first case, the graph-forming system 110 selects all image regions of the screenshot 302 for further analysis, including image regions representing all windows, all toolbars, etc. in the user interface presentation. In a second case, the graph-forming system 110 only selects image regions that represent the windows presented on the user interface presentation. In a third case, the graph-forming system 110 selects the M most prominent image regions of the user interface presentation, such as the M largest image regions (where M is a configurable number). In a fourth case, the graph-forming system 110 only selects the image region associated with the active window (if any) with which the user is currently interacting. The graph-forming system 110 performs the same selection process to select among the text regions 306. In some implementations, the graph-forming system 110 also uses optical character recognition (OCR) to extract the text from the text region(s), and then concatenates all of the extracted text into a single sequence of text. Optionally, the graph-forming system 110 inserts separator tokens (SEP) between different parts of this single sequence.

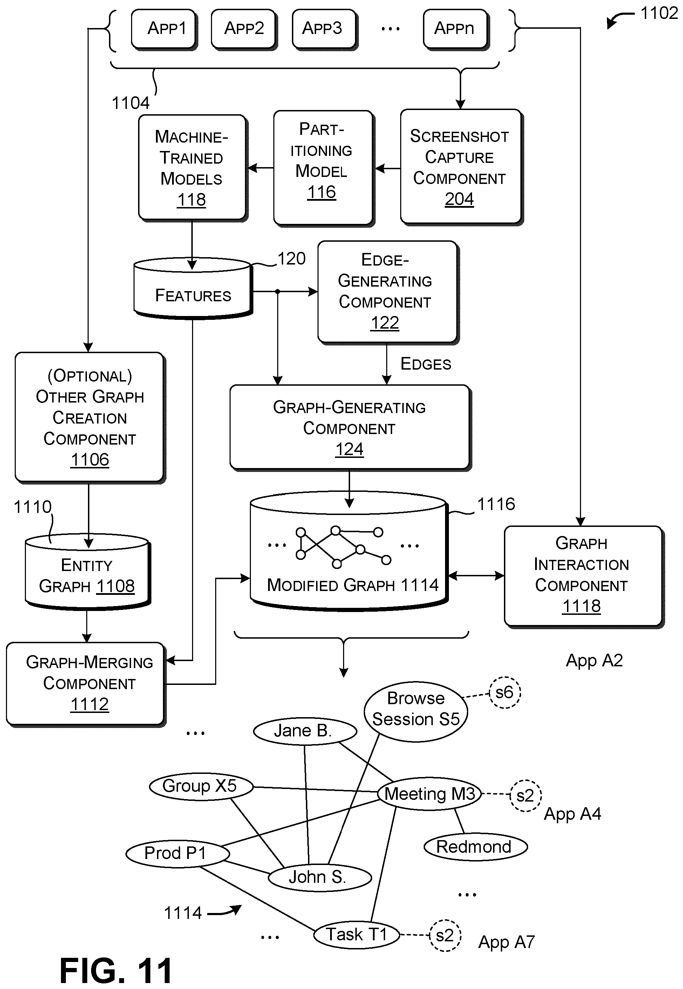

In some implementations, the graph-generating system 102 assigns a node to only the contents of a user interface presentation that are selected. In a first case assume that only the active window is selected. Here, the graph-generating system 102 assigns a node that represents just the active window. In a second case, plural windows are selected. Here, the graph-generating system 102 uses a single node to jointly represent all of the selected windows. In a third case, the graph-generating system 102 assigns nodes to represent individual windows. In a fourth case, the graph-generating system 102 assigns nodes to objects, topics, named entities, etc. within one or more window(s), and so on. To facilitate explanation, examples are presented below based on the first case, in which each node represents an active window that is being presented by a user interface presentation at the present time, and the image content and text content presented therein. Fig. 11 will present a system that integrates screenshot nodes with other nodes that represent individual entities, such as people, products, places, documents, topics, and/or activities, etc.

As another implementation, at the outset, the screen capture component 202 only captures part of a user interface presentation, such as all of the open windows, or just the active window. In this implementation, the type of selecting shown in Fig. 3 is subsumed at least in part by the initial selection made by the screenshot capture component 202.

Fig. 4 shows the entirety of a user interface presentation 402 that is presented at a current time. The user interface presentation 402 includes a toolbar region 404 and two windows (406, 408). Assume that the window 406 is the active window with which the user is currently interacting. Window 406 includes two text regions. It also includes image content pertaining to various graphical features of the window 406. Window 408 includes an image region that shows a picture. and a text region. It also includes image content pertaining to various graphical features of the window 408. Assume that the graph-generating system 102 assigns a screenshot node in the graph 104 to represent the contents of just the active window 406, ignoring the remainder of the user interface presentation 402. The screenshot capture component 202 stores metadata that represents the name of the application that is presenting the active window 406 and the time that the user interface presentation 402 was captured. This UI-to-node assigning strategy is just one possibility; as noted above, other implementations of the graph-generating system 102 use other node-assigning rules to represent the contents of the user interface presentation 402.

Fig. 5 shows a plurality of machine-trained models 118 used by the graph-forming system of Fig. 5. A text embedding-generating model 502 maps the concatenated text associated with a screenshot into a text embedding. An image embedding-generating model 504 maps the selected image regions associated with a screenshot into an image embedding. These two models (502, 504) are implementing using any type of neural network, including a feed-forward network, a convolutional neural network (CNN), a transformer neural network, etc., or any combination thereof.

An activity model 506 maps the text content and/or image content of a screenshot into an indication of activities represented by a screenshot. For example, assume that a node represents just the active window of a user interface presentation. The activity model 506 classifies the activity that is being performed via the active window. A topic model 508 maps the text content and/or image content of a screenshot into the topics being expressed in the screenshot. A NER model 510 identifies the named entities (if any) that are expressed in the text content of the screenshot. In some implementations, these types of models are implemented using any type of classification model, such as a logistic regression model, a decision tree model, a transformer-based model, a recurrent neural network (RNN) model, a convolutional neural network (CNN) model, a conditional random fields (CRF) model, and so on. For example, a BERT-based transformer model is used to implement at least some of these models. The BERT-based transformer model includes different classification heads (e.g., implemented by different feed-forward neural networks) that are trained by supervised learning to perform different classification tasks. General background information regarding the BERT model is provided in Devlin, et al., "BERT: Pretraining of Deep Bidirectional Transformers for Language Understanding," arXiv, arXiv:1810.04805v2 [cs.CL], May 24, 2019, 16 pages.

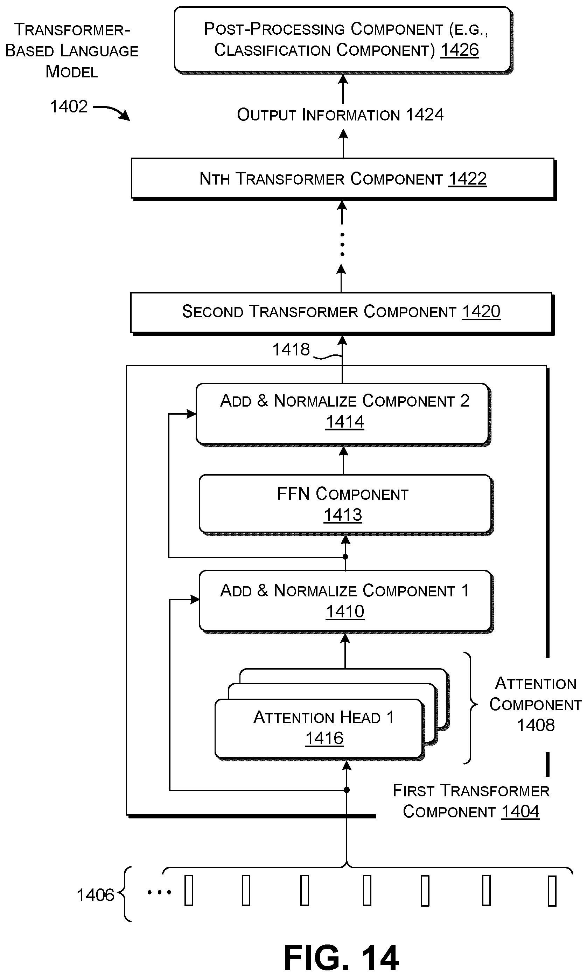

Additional information regarding the implementation of the models 118 is set forth below in the context of the explanation of Figs. 14-17. In some implementations, each machine-trained model is trained using supervised learning based on a set of training examples, each of which include screenshot information and a ground-truth result that indicates a correct processing result for this screenshot information, such as the correct classification for this screenshot information. A training system 512 uses any loss function, such as cross entropy, to compute loss information, which reflects the differences between model-generated results and the ground-truth results. The training system 512 updates the weights of the machine-trained model (or just the post-processing component 1426) based on the loss information using stochastic gradient descent in combination with back propagation. Any model can alternatively be trained via semi-supervised training or any other training technique.

Fig. 6 shows an illustrative portion of a graph 602 created by the graph-generating system 102 of Fig. 1. The graph 602 includes a plurality of screenshot nodes (s1, s2, s4, ...) that represent screenshots and a plurality of text nodes (t1, t2, t3, ...) that represent instances of text associated with respective screenshots. Examples of instances of text include: an instance of text that corresponds to text found in a particular screenshot; a query that was previously used to access the particular screenshot; a caption that is associated with image content presented in the screenshot, and so on.

The graph 602 also includes edges having different edge types. A first edge type connects screenshot nodes associated with screenshots having similar image content. A second edge type connects screenshot nodes associated with screenshots having similar text context. A third edge type connects screenshot nodes associated with screenshots that express a common activity. A fourth type of edge connects screenshot nodes associated with screenshots that express a common topic. A fifth type of edge connects screenshot nodes associated with screenshots that express a common named entity. A sixth type of node connects a text node to at least one screenshot node, indicating that the text node relates to the screenshot associated with that screenshot node. In some implementations, edges include additional metadata. For example, a particular edge between two screenshots not only indicates that the two screenshots share a common topic, but also specifies that common topic.

## C. The GNN-Training System

Fig. 7 shows one implementation of the GNN-generating component 128 of the GNN-training system 106. As described in Section A, the purpose of the GNN-generating component 128 is to generate the GNN 108. At the start of training, each node in the graph 104 is associated with an initial embedding, corresponding to the text embedding produced by the text embedding-generating model 502 and/or an image embedding produced by the image embedding-generating model 504. For example, the initial embedding is a combination (concatenation, sum, average, etc.) of the text embedding and image embedding. Training involves iteratively updating these node embeddings based on a training objective specified by a loss function. When training is complete, the GNN-training system 106 stores the final embeddings associated with the nodes in the data store 130. These final node embeddings are referred to as target embeddings.

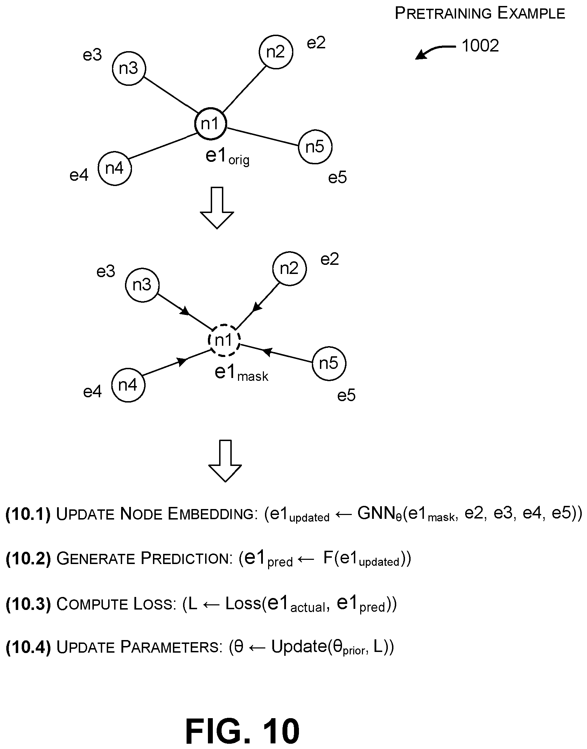

The GNN-generating component 128 will be described below in the context of processing performed on a specified node *i* under consideration, such as the node n1 shown in Fig. 8. Further, the GNN-generating component 128 will first be described for the case of supervised training in which training examples include explicit ground-truth results. However, as will be clarified below with reference to Fig. 9 and 10, the principles imparted with respect to Fig. 8 can be extended for the case of self-supervised training in which the objective of training is to accurately predict the identity of masked nodes. In that implementation, no explicit ground-truth results are provided.

Assume that the node n1 is associated with an initial embedding $h_i$. A neighbor-identifying component 702 identifies the neighbors of the node under consideration. In the example of Fig. 8, the neighbors include nodes n2, n3, n5, and n5. Each such neighbor node *j* is associated with its own initial embedding $h_j$. A contribution-accumulating component 704 accumulates the embeddings of the neighbor nodes. In the particular case of a graph attention network, the contribution-accumulating component 704 collects the weighted contributions of the embeddings of the neighbor nodes, based on a weight $\alpha_{ij}$ associated with each edge that links a neighbor node *j* to the node *i* under consideration. A node-updating component 706 uses the results of the contribution-accumulating component 704 to generate a new embedding for the node under consideration. The GNN-generating component 128 can repeat the above operations one or more times. At each stage, the input embedding of a node is the embedding produced by a last iteration of the operations. In other words, each repetition of the operations is analogous to operations performed by a layer of a multi-layer convolutional neural network.

More specifically, for the case of a graph attention network (GAT), the GNN-generating component 128 produces an updated embedding based on:

$$h_i{'} = \sigma \left( \sum_{j \in \mathcal{N}_i} \alpha_{ij} W h_j \right) \qquad (1).$$

In this equation, $h_i{'}$ represents the updated embedding of the node under consideration *i* (here node n1), $h_j$ represents the embedding of each neighbor node *j*, $\mathcal{N}_i$ represents the number of neighbor nodes, $\alpha_{ij}$ is the weight between the node *i* and the neighbor node *j*, W is a machine-trained weight matrix, and $\sigma$ is a sigmoid transformation. In some implementations, $\alpha_{ij}$ is given by:

$$\alpha_{ij} = \frac{\exp \left( \text{LeakyReLU}(a^T [W h_i \parallel W h_j]) \right)}{\sum_{k \in \mathcal{N}_i} \exp \left( \text{LeakyReLU}(a^T [W h_i \parallel W h_k]) \right)} \qquad (2).$$

In this equation, LeakyReLU refers to a conventional type of nonlinear activation function, W is the weight matrix, $\parallel$ refers to a concatenation operation, and $a^T$ is the transpose of machine-trained weight vector which parametrizes a single-layer neural network. Overall, Equation (2) expresses a softmax operation (normalized exponential function) that determines the weight $\alpha_{ij}$ between nodes *i* and *j* as a function of the embeddings associated with these two nodes, normalized based on the similarly-computed weights of other edges connected to node *i*.

Assume that there are *K* edge types in the graph 104, examples of which are shown in Fig. 6. In some implementations, the GNN-generating component 128 applies Equations (1) and (2) to all edges without consideration of the types of the edges. In other implementations, the GNN-generating component 128 separately applies these equations for each type of edge under consideration. That is, for each type, the GNN considers only the neighbors connected to the node under consideration via this type of edge. The GNN-generating component 128 then sums the results of these edge-specific computations, and divides by the number K of edge types that have been considered.

Background information on the general topic of graph attention networks is available at Veličković, et al., "Graph Attention Networks," arXiv, arXiv:1710.10903v3 [stat.ML], February 4, 2018, 12 pages. Note, however, that the principles set forth here are applicable to other types of graph neural networks, including convolutional graphical neural networks, relational graph neural networks, a GraphSAGE neural network, and so on.

A post-processing component 708 performs some type of post-processing operation on the embedding produced by the node-updating component 706. For example, the post-processing component 708 is implemented as a feed-forward neural network that maps the embedding produced by Equation (1) into a classification result. For the case of supervised learning, a loss-generating component 710 compares the result of the post-processing component 708 to a given ground-truth result. This yields loss information. For example, the loss-generating component 710 determines the difference between a classification produced by the post-processing component 708 with a given correct classification. In some implementations, the loss-generating component 710 uses cosine similarity to determine the difference between an individual model-generated result (given by the post-processing component 708) and a ground-truth result, and computes overall loss for a plurality of loss measures using a cross entropy loss function. A parameter-updating component 712 updates parameters 714 of the GNN 108 based on the loss information, e.g., using stochastic gradient descent in combination with back propagation.

Fig. 8 is an example 802 that summarizes the operations described above with respect to node n1, which is the node under consideration. In operation 8.1, the GNN-generating component 128 identifies the neighbors of node n1. In operation 8.2, the GNN-generating component 128 accumulates the embeddings of the neighbor nodes. In operation 8.3, the GNN-generating component 128 updates the node embedding for node n1 based on the results of operation 8.2. The loop indicates that operations 8.1-8.3 can optionally be repeated one or more times. In operation 8.4, the GNN-generating component 128 performs some type of post-processing operation on the updated node embedding. In operation 8.5, the GNN-generating component 128 computes the loss by comparing the result of operation 8.4 with a ground-truth result. In operation 8.6, the GNN-generating component 128 updates the parameters 714 of the GNN 108 based on the loss computed in operation 8.5.

Fig. 9 shows functionality for producing the GNN 108 in a series of stages. In a first stage, a pretraining component 902 performs training based on a set of images and associated instances of text, which yields a pretrained model 904. That is, the graph-generating component 124 produces a pretrained graph in the manner described above based on these images and instance of text, and the pretraining component 902 operates on this graph. The images in the set of images are not necessarily screenshot images at this stage. For example, the images are scraped from the Word Wide Web, and may originate from web pages, document collections, blog posts, picture collections, and so on. An instance of text associated with such an image is any textual information that describes the image or otherwise has some nexus to the image. For instance, an instance of text associated with a particular image corresponds to caption associated with the image, textual information extracted from the image, a query submitted to a search engine for the purpose of retrieving the image, and so on.

In a second stage, a finetuning component 906 finetunes parameters of the pretrained model 904 based on a set of screenshots and associated instances of text, which yields a finetuned model 908. That is, the graph-generating component 124 produces a finetuning graph in the manner described above based on these screenshots and instances of text, and the finetuning component 906 operates on this graph The images in the set of images at this stage are screenshots. For instance, the images originate from plural local computing devices, which capture the screenshots in the course of presenting user interface presentations to users. In some implementations, the second stage is more specifically adapted for use in a particular application or subject matter field (such as a medical field). This is accomplished by using screenshots that specifically depict interaction with a certain kind of application and/or a certain type of content.

In general, it is advantageous to perform training in the above-described staged manner because it may be difficult to obtain a sufficient number of relevant screenshots on which to perform training. The pretraining relies on a large collection of images and effectively primes the GNN 108 for finetuning. In some examples, the finetuning itself uses a relatively small collection of screenshots.

The pretraining component 902 performs the type of training described above with reference to Fig. 7. But the pretraining component 902 performs self-supervised learning rather than supervised learning. For example, again assume that the training is applied with respect to the illustrative node n1. In the self-supervised approach, the pretraining component 902 first masks the node n1 by replacing its original embedding with a dummy embedding, such as a default initial embedding that does not necessarily have any relation to the content of the screenshot associated with n1. The pretraining component 902 performs training that is guided by the objective of correctly predicting the identity of the masked node, here the masked node n1. In other words, the type of self-supervised training is analogous to the masking of text tokens that is applied to pretrain language models, e.g., as in the case of the BERT transformer-based model.

More specifically, referring momentarily back to Fig. 7, the neighbor-identifying component 702, contribution-accumulating component 704, and node-updating component 706 perform the same operations set forth above for the case of self-supervised training, with the exception that the embedding of the node n1 is replaced with a default embedding. The post-processing component 708 performs a decoding task of mapping the embedding produced by the node-updating component 706 for n1 to a prediction of the identity of the node n1. In some implementations, the post-processing component 708 performs this mapping operation using a machine-trained feed-forward neural network. In effect, this mapping attempts to predict the identity of the masked node based on context information collected from the masked node's neighbors.

The loss-generating component 710 computes loss by measuring the difference between the prediction produced by the post-processing component 708 for the node n1 and the known (correct) identity of the node n1. In some implementations, the known identity and model-predicted identity of node n1 are the known embedding for the node n1 (e.g., produced by the embedding-generating models (502, 504)) and the predicted embedding for the node n1, respectively. This type of training is referred to as self-supervised because it relies on predicting information that is part of the input data as originally given, and does not require separate labeling of the input data.

The finetuning component 906 performs the same type of masking and predicting as the pretraining component 902. The only difference is that the finetuning component 906 operates on screenshots (and associated instances of text), whereas the pretraining component 902 operates on generic images (and associated instances of text). The finetuned model 908, once fully trained, constitutes the GNN 108 shown in Fig. 8.

In some implementations, the training performed by the pretraining component 902 and the finetuning component 906 is executed by a network-accessible computing system 910 (e.g., a cloud computing system). The network-accessible computing system 910 transfers the finetuned model 908 to a local computing device 912 via a computing network 914 (e.g., the Internet). Assume that the local computing device 912 captures screenshots (and associated instances of text) in the manner described above with respect to Fig. 2. Further assume that the graph-generating component 124 generates a local graph based on these local screenshots (and instances of text) in the manner described above. A localizing component 916 uses the finetuned model 908 to map initial node embeddings in the local graph into final embeddings, referred to as target embeddings. Note that this operation is not accompanied by the generating of loss information and the updating of the parameters of the finetuned model 908. In other words, the parameters of the finetuned model 908 are considered fixed or frozen at this stage. Further note that each local computing device separately performs the localizing operations described above based on its own set of locally-captured screenshots (and instances of text).

The process of training the GNN 108 set forth above is scalable because it allows each local computing device 912 to produce target embeddings that represent local screenshots captured by the local computing device 912, without requiring the local computing device 912 to perform the most resource-intensive parts of the training. Instead, this training is performed by the network-accessible computing system 910.

Fig. 9 shows one pass of an end-to-end graph development process. In other implementations, the network-accessible computing system 910 repeats its finetuning (and possibly pretraining) to account for new training examples and/or any other considerations. This yields an updated finetuned model 908, which the network-accessible computing system 910 forwards to the local computing device 912. The GNN-generating component 128 of the local computing device 912 will then update the target embeddings using the updated finetuned model 908. Further note that the local computing device 912 updates the target embeddings as new screenshots are captured by the local computing device 912. The local computing device 912 performs the above actions on any basis, e.g., a continuous basis, a periodic basis, and/or an event-driven basis.

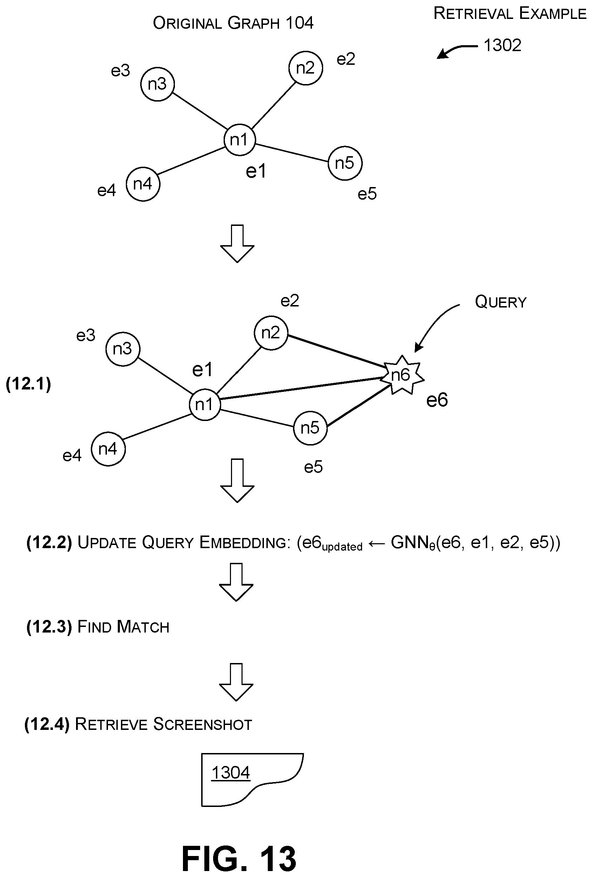

More specifically, different implementations of the GNN-generating component 128 respond to the capture of new screenshots in different respective ways. Assume that the screenshot capture component 202 produces a new screenshot. The graph-generating system 102 creates a new node for this new screenshot and links this new node to the existing nodes in the graph 104. The GNN-generating component 128 then generates a target embedding for the new node. These operations follow the same flow described below with respect to Fig. 13, with the exception that, here, the new node is associated with a new screenshot image, not an input query.

Note that the introduction of a new node may also have an effect on the target embeddings of existing nodes associated with prior-captured screenshots. For example, assume that a new node represents a recently captured screenshot, and this node has five neighboring nodes associated with previously captured screenshots. The introduction of the new node may affect the target embedding associated with any one of these neighboring target embeddings. In one approach, the GNN-generating component 128 recomputes the target embeddings associated with all of the nodes (or some subset thereof) in the graph on a periodic basis (e.g., every hour or every day). Note that these update operations affect the target embeddings, but the weights of the GNN 108 remain frozen at the local computing device 912. Further note that, for each new node that represents an image of a recently captured screenshot, the graph-forming system 110 can also create a node that represents an instance of text that is related to the screenshot.

Fig. 10 shows an example 1002 of the above-described operations performed by the pretraining component 902 and the finetuning component 906. Assume that node n1 is masked in the manner specified above. In operation 10.1, the GNN-generating component 128 updates the node embedding for node n1 in the manner described above. In operation 10.2, the GNN-generating component 128 predicts the identity of the masked node n1. In operation 10.3, the GNN-generating component 128 determines loss based on the difference between the predicted identity and the actual identity of the masked node n1. In operation 10.4, the GNN-generating component 128 updates the parameters 714 of the GNN 108 based on the loss computed in operation 10.3.

## D. Integrating the Screenshot Graph with Other Graph Information

Fig. 11 shows a system 1102 for integrating the type of screenshot-centric graph shown in Fig. 6 with a more expressive graph that represents individual entities. Part of the system 1102 operates in the same manner described above with respect to Fig. 1. That is, the screenshot capture component 202 captures a plurality of screenshots during a user's interaction with plural applications 1104 via a local computing device (or via plural affiliating computing devices). The partitioning model 116 partitions each screenshot into zero, one, or more image regions and zero, one, or more text regions. The plurality of machine-trained models 118 generate features based on the image regions and text regions. The data store 120 stores the features. The edge-determining component 122 produces different types of relationships between screenshot based on the features. The graph-generating component 124 produces the screenshot graph 104 (not shown in Fig. 11) by assigning nodes to the screenshots and edges to the relationships determined by the edge-determining component 122.

In addition to the above components, the applications directly report application activity to another graph creation component 1106, e.g., as messages sent via application programming interfaces (APIs). For example, a calendar application reports details of a user's schedule to the other graph creation component 1106. A document creation application reports metadata regarding documents created by the user to the graph creation component 1106. A social media application reports contacts associated with the user to the other graph creation component 1106, and so on. These types of signals emanate from events in the execution of a program; they are not mined from images in the manner described above.

In response to these signals, the graph creation component 1106 updates an entity graph 1108 provided in a data store 1110. The entity graph 1108 identifies people, activities, products, topics, places, documents, locations, etc., and the links between these entities. For example, with respect to a scheduled meeting, the other graph creation component 1106 produces a meeting node that represents the meeting, and links this meeting node to the people nodes associated with the attendees of the meeting. It also links the meeting node to a location node associated with the location at which the meeting will be conducted. In some implementations, the other graph creation component represents Microsoft Graph maintained by Microsoft Corporation of Redmond, Washington.

A graph-merging component 1112 integrates the entity graph 1108 with the screenshot graph 104, to produce a modified graph 1114 stored in a data store 1116. In some implementations, the graph-merging component 1112 performs this task by transferring the nodes and links of the existing entity graph 1108 to the modified graph 1114. In addition, guided by the features produced by the machine-trained models 118, the graph-merging component 1112 links the screenshot nodes in the modified graph 1114 with the existing entity nodes and creates any new entity nodes as necessary. For example, assume that a screenshot captures an image of a meeting invitation produced by a video conferencing application. In response, the graph-merging component 1112: 1) creates a new meeting node in the modified graph 1114 associated with the new meeting; 2) links the meeting node to any preexisting people nodes associated with the meeting attendees; 3) creates a new person node for any attendee that does not have a preexisting person node, and links the meeting node to this new person node; and 4) links all or some of the above-identified nodes to the screenshot node associated with the meeting.

The bottom portion of Fig. 11 shows a small portion of the modified graph 1114. This portion includes people nodes, group nodes (associated with groups of people), meeting nodes, product nodes, activity nodes, location nodes, task nodes, meeting nodes, document nodes, screenshot nodes, etc. Although not shown, the portion also includes different types of edges associated with different types of relationships among the nodes.

In another implementation, the graph-generating component 124 creates and updates the modified graph 1114 based on the features and edges mined from the screenshots alone, without involvement with any preexisting graph creation service, and without reference to any preexisting entity graph.

In some implementations, the above-described graph-creation operations are performed by each local computing device. In other implementations, the graph-creation operations are performed by a network-accessible computing system. In other implementations, the graph-creation operations are performed by a combination of local and system processing.

A graph interaction component 1118 allows any application to interact with the modified graph 1114 via APIs. For example, an application is able to query the modified graph 1124 for information using a GET API. For instance, assume that a user is interacting with an Email application for the purpose of creating a new Email message, the topic of which relates to a particular document. The Email application is able to interact with the modified graph 1114 to identify the authors of the document.

**E. The Retrieval System**

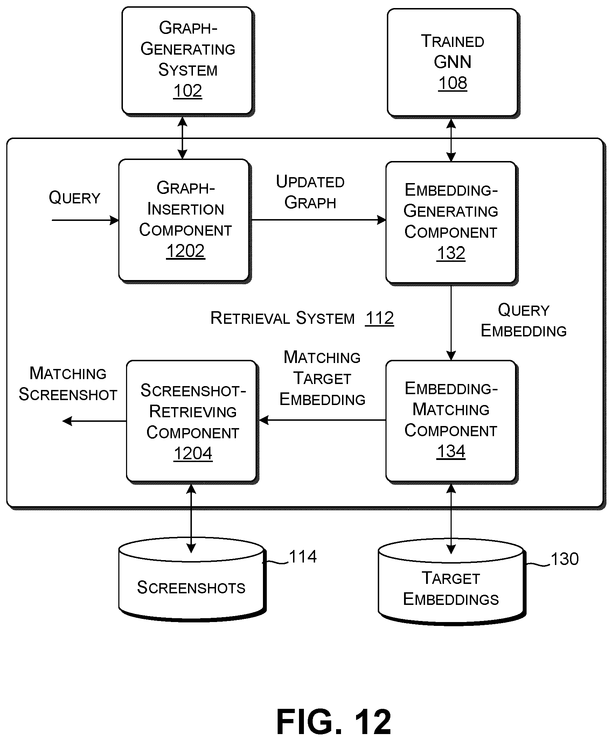

Fig. 12 shows one implementation of the retrieval system 112 introduced in Fig. 1. Recall that the purpose of the retrieval system 112 is to retrieve information regarding one or more previously captured screenshots based on the submission of a query. The query expresses a search objective using one or more words and/or one or more images.

A graph-insertion component 1202 interacts with the graph-generating system 102 to generate features that describe the query. For example, the text embedding-generating model 502 generates a text embedding for any text content that is presented by the query. The image embedding-generating model 504 identifies an image embedding associated with any image content that is presented by the query. The activity model 506, topic model 508, and NER model 510 also respectively identify any activities, topics, and named entities in the query.

Next, the graph-insertion component 1202 inserts a new query node (not shown) to the graph 104. Assume that the query includes only text content. In this example, the graph-insertion component 1202 assigns the text embedding produced by the text embedding-generating model 502 to the new query node. The graph-insertion component 1202 then generates edges based on the features that link the new query node to one or more preexisting screenshot nodes in the graph 104. For example, assume that the query identifies a named entity. The graph-insertion component 1202 will link the new query node to at least one screenshot node that also pertains to this named entity.

The embedding-generating component 132 interacts with the GNN 108 to generate an updated query embedding. This involves performing operations 8.1, 8.2, and 8.3 of Fig. 8, in which the node under consideration is now the query node. The embedding-matching component 134 searches the target embeddings in the data store 130 to find zero, one, or more target embeddings that match the updated query embedding, within a prescribed tolerance. For instance, the embedding-matching component 124 finds a prescribed number of the best target embeddings, ranked by their similarity scores. The embedding-matching component 134 determines the degree to which any candidate target embedding matches the updated query embedding using cosine similarity or any other distance metric. The embedding-matching component 134 can also use any technique to expedite the search, such as the k-nearest neighbor (KNN) technique or the approximate nearest neighbor (ANN) technique.

Assume that the data store 130 serves as an index that also identifies the screenshot associated with each target embedding. A screenshot-retrieving component 1204 uses this index to identify a screenshot associated with each matching target embedding. The screenshot-retrieving component 1204 then retrieves the identified screenshot from the data store 114. The retrieval system 112 then presents any information regarding the matching screenshot to the user, such as displaying the screenshot itself or metadata extracted from the screenshot.

Fig. 13 shows an example 1302 of the operation of the retrieval system 112 of Fig. 12. In operation 12.1, the retrieval system 112 adds a new query node to the original graph 104 (here, text node n6), to produce an updated graph. In operation 12.2, the retrieval system 112 produces an updated query embedding for the new query node by interacting with the GNN 108. In operation 12.3, the retrieval system 112 compares the updated query embedding against the target embeddings. In operation 12.4, the retrieval system 112 retrieves a screenshot 1304 associated with a best-matching target embedding.

Alternatively, or in addition, the retrieval system 112 enables a user to perform a search directly over the nodes the original graph 104 or the modified graph 1114 (of Fig. 11). To accommodate such a search, the retrieval system 112 maintains an index (not shown) that identifies the nodes in the graph 104 (or the modified graph 1114), the connections among nodes, and the metadata associated with each node. For the case of a screenshot node, the metadata includes any of the information extracted from the machine-trained models, including any of a text embedding, image embedding, named entity(ies), activity(ies), topic(s), and so on. For the case of an entity node in the modified graph 1114 associated with a particular entity (a person, place, product, activity, meeting, document, group, etc.), the metadata includes just an embedding and/or textual entry associated with the particular entity.

In response to the submission of a query, the retrieval system 112 performs a search over the index and identifies at least one node that most closely matches the query, referred to herein as a matching node. The retrieval system 112 can perform this search using any combination of a lexical-based search, feature-based search (e.g., Okapi BM25), vector-based search, etc. Optionally, the retrieval system 112 also retrieves information from some or all of the neighboring nodes that are linked to the matching node and/or which satisfy other criteria. A configuration interface enables a user to specify the maximum degree of neighbors from which the retrieval system 112 is permitted to retrieve information, that is, by specifying a maximum number of hops that the retrieval system 1121 is permitted to traverse starting from the matching node.

Further, the retrieval system 112 provides a user interface presentation (not shown) that presents a representation of the graph 104 (or the modified graph 1114). The retrieval system 112 provides graphical controls that enable a user to traverse different parts of the graph 104 (or the modified graph 1114), retrieve and display any metadata associated with a node, and retrieve and display any screenshot associated with a screenshot node.

## F. Illustrative Machine-Trained Models

The remainder of this section provides examples of machine-trained models for implementing some of the machine-trained models 118 shown in Fig. 5. To begin with, Fig. 14 shows a transformer-based language model ("language model") 1402. The language model 1402 includes a pipeline of transformer components, including a first transformer component 1404. Fig. 14 provides details regarding one way to implement the first transformer component 1404. Although not specifically illustrated, other transformer components of the language model 1402 have the same architecture and perform the same functions as the first transformer component 1404 (but are governed by separate sets of weights).

The language model 1402 receives input information, such text extracted from a screenshot. The language model first converts the text into tokens. In some examples, a "token" refers to a unit of text having any granularity, such as an individual word, a word fragment produced by byte pair encoding (BPE), a character n-gram, a word fragment identified by the WordPiece or SentencePiece algorithm, etc. To facilitate explanation, assume that each token corresponds to a complete word. In a BERT-based implementation, the language model 1402 also adds a special classification token (CLS) to the start of a sequence of text-based tokens. The classification token is associated with a predetermined token ID (e.g., the ID of 101).

In other examples, the language model 1402 operates on any of: audio information, image information, video information, sensor information, and so on, or any combination thereof. For example, the language model 1402 produces tokens associated with an image by breaking the image into smaller image patches, and then using a neural network to map the pixel information of each image patch into an embedding vector, which serves as a token for the image patch for input to the language model 1402. General background information on one approach for tokenizing image content is provided in Dosovitskiy, et al., "An Image is Worth 16x16 Words: Transformers for Image Recognition at Scale," arXiv, arXiv:2010.11929v2 [cs.CV], June 3, 2021, 22 pages.

Next, an embedding component (not shown) maps the sequence of text tokens into respective token embeddings. For example, the embedding component produces one-hot vectors that describe the tokens, and then maps the one-hot vectors into the token embeddings using a machine-trained linear transformation. Note that the image tokens are already in the embedding space. The embedding component then adds position information (and, in some cases, segment information) to the respective token embeddings to produce position-supplemented embedding vectors 1406. The position information added to each token embedding describes the embedding vector's position in the sequence of token embeddings.

The first transformer component 1404 operates on the position-supplemented embedding vectors 1406. In some implementations, the first transformer component 1404 includes, in order, an attention component 1408, a first add-and-normalize component 1410, a feed-forward neural network (FFN) component 1412, and a second add-and-normalize component 1414.

The attention component 1408 determines how much emphasis should be placed on parts of input information when interpreting other parts of the input information. Consider, for example, a sentence that reads: "I asked the professor a question, but he could not answer it." When interpreting the word "it," the attention component 1408 will determine how much weight or emphasis should be placed on each of the words of the sentence. The attention component 1408 will find that the word "question" is most significant.

The attention component 1408 performs attention analysis using the following equation:

$$Attention(Q, K, V) = \text{softmax}\left(\frac{QK^T}{\sqrt{d}}\right)V \qquad (3).$$

The attention component 1408 produces query information $Q$ by multiplying the position-supplemented embedding vectors 1406 by a query weighting matrix $W^Q$. Similarly, the attention component 1408 produces key information $K$ and value information $V$ by multiplying the position-supplemented embedding vectors 1406 by a key weighting matrix $W^K$ and a value weighting matrix $W^V$, respectively. To execute Equation (3), the attention component 1408 takes the dot product of $Q$ with the transpose of $K$, and then divides the dot product by a scaling factor $\sqrt{d}$, to produce a scaled result. The symbol d represents the dimensionality of $Q$ and $K$. The attention component 1408 takes the softmax of the scaled result, and then multiplies the result of the softmax operation by $V$, to produce attention output information. In some cases, the attention component 1408 is said to perform masked attention insofar as the attention component 1408 masks output token information that, at any given time, has not yet been determined. Background information regarding the general concept of attention is provided in Vaswani, et al., "Attention Is All You Need," in 31st Conference on Neural Information Processing Systems (NIPS 2017), 2017, 11 pages.

Note that Fig. 14 shows that the attention component 1408 is composed of plural attention heads, including a representative attention head 1416. Each attention head performs the computations specified by Equation (3), but with respect to a particular representational subspace that is different than the subspaces of the other attention heads. To accomplish this operation, the attention heads perform the computations described above using different respective sets of query, key, and value weight matrices. Although not shown, the attention component 1408 concatenates the output results of the attention component's separate attention heads, and then multiplies the results of this concatenation by another weight matrix $W^O$.

The add-and-normalize component 1410 includes a residual connection that combines (e.g., sums) input information fed to the attention component 1408 with the output information generated by the attention component 1408. The add-and-normalize component 1410 then normalizes the output information generated by the residual connection, e.g., by layer-normalizing values in the output information based on the mean and standard deviation of those values, or by performing root-mean-squared normalization. The other add-and-normalize component 1414 performs the same functions as the first-mentioned add-and-normalize component 1410. The FFN component 1412 transforms input information to output information using a feed-forward neural network having any number of layers.

The first transformer component 1404 produces output information 1418. A series of other transformer components (1420, ..., 1422) perform the same functions as the first transformer component 1404, each operating on output information produced by its immediately preceding transformer component. Each transformer component uses its own level-specific set of machine-trained weights. The final transformer component 1422 in the language model 1402 produces final output information 1424. The final output information 1424 includes a series of output embeddings associated with the tokens that have been fed to the transformer components (1404, 1420, 1422).

In the case of the text embedding-generating model 502, the final output information 1424 constitutes the text embedding produced by this model. In the case of the image embedding-generating model 504, the final output information 1424 is the image embedding produced this model.

With respect to the classification models, a post-processing component 1426 performs further post-processing operations on the final output information 1424. For example, the post-processing component 1426 includes a feed-forward neural network (e.g., a fully connected neural network having any number of layers) followed by a softmax operation. The feed-forward neural network maps the final output information 1424 into post-processed information. The softmax operation maps the post-processed information into a classification result. More specifically, each classification model uses a different instance of the post-processing component 1426, which is trained (optionally with the base transformer layers of the language model 1402) to perform a particular kind of classification. Each instance of the post-processing component 1426 constitutes a classification head.

In the particular case of the activity model 506, the post-processing component 1426 produces a result that identifies the activity associated with a screenshot. In the case of the topic model, the post-processing component 1426 produces a result that identifies the most likely topic(s) associated with the screenshot. In these examples, the post-processing component 1426 operates on the output embedding of the final output information 1424 that represents the transformed counterpart of the CLS token. Alternatively, the post-processing component 1426 pools the output embeddings of the final output information 1424 and then maps this pooled result to a classification result. In the case of the NER model 510, the post-processing component 1426 maps the output embedding associated with each input token to an indication of an entity type associated with the input token, if any.

Fig. 15 shows an illustrative machine-trained model 1502 that uses convolutional neural network (CNN) technology. In some applications, the model 1502 operates on feature information that describes text-based information, which can be tokenized in the manner described above. In other applications, the model 1502 operates on feature information that describes the pixels in image-based information. In still other applications, the model 1502 operates on a combination (e.g., a concatenation) of text-based and image-based feature information.

The model 1502 itself provides a pipeline that includes plural encoder blocks (e.g., encoder blocks 1504, 1506) optionally interspersed with pooling components, not shown). Fig. 15 specifically shows the illustrative case in which the representative encoder block 1504 includes a pair of convolutional components (1508, 1510). Fig. 15 also shows an optional residual connection 1512 that adds input information fed to the first convolutional component 1508 to output information produced by the second convolutional component 1510.

Each convolutional component performs a convolution operation that involves moving an $n \times m$ kernel (e.g., a $3 \times 3$ kernel) across feature information supplied to the convolutional component. The kernel has machine-trained values. In the case of an input image, the feature information represents image information. In the case of an input text item, the feature information represents text information. At each position of the kernel, the encoding subcomponent generates the dot product of the kernel values with the underlying values of the feature information. The bottom of Fig. 15 represents this convolution operation in high-level form. Each pooling component (not shown) down-samples results of a preceding convolutional operation using some kind of sampling function, such as, for example, a maximum operation that selects a maximum value within a subset of values.

A final encoder block produces final output information that serves as an embedding for the text embedding-generating component 502 or the image embedding-generating model 504 (depending on what type of content is input to the model 1502) . Alternatively, a classification component 1514 maps the final output information to an output classification. In some implementations, the classification component 1514 is implemented by a feed-forward neural network of any type in combination with a softmax component. Background information regarding one type of convolutional neural network for image processing is provided in He, et al., Deep Residual Learning for Image Recognition," arXiv, arXiv:1512.03385v1 [cs.CV], December 10, 2015, 10 pages. Another type of model is described in Yuan, et al., "Florence: A New Foundation Model for Computer Vision," arXiv, arXiv:2111.11432v1 [cs.CV], November 2021, 17 pages.

Advancing to Fig. 16, this figure shows one non-limiting implementation of the partitioning model 116. The partitioning model 116 uses a base CNN 1602 to convert an input image into feature information. A region-identifying component 1604 operates on the feature information to detect objects in the image and their respective bounding boxes. In the YOLO technique, the region-identifying component 1604 divides an image into a plurality of cells. The region-identifying component 1604 then identifies a plurality of candidate bounding boxes that are anchored with respect to each cell, but which have different dimensions (e.g., different aspect ratios). Fig. 17, for instance, shows a plurality of candidate bounding boxes (shown in dashed lines) that are anchored with respect to a reference position of a particular cell 1702. The region-identifying component 1604 then determines the most likely object that appears in each candidate bounding box, if any, and the confidence score of that prediction. In context of the graph-generating system 102, the region-identifying component 1604 discriminates between two kinds of objects, image regions and text regions. The region-identifying component 1604 also determines an offset of each bounding box in relation to a reference position of the cell. The region-identifying component 1604 includes a subsequent consolidation phase that uses the non-maximum suppression algorithm to reduce the number of candidate bonding boxes. Additional background information regarding the YOLO technique is provided in Redmon, et al., "You Only Look Once: Unified, Real-Time Object Detection," available at arXiv:1506.02640v5 [cs.CV], May 9, 2016, 10 pages. Code that implements the YOLO model is also publicly available, e.g., from the GitHub website provided by Microsoft Corporation of Redmond, Washington.

More generally, although specific machine-trained models are described in this section, other implementations can adopt other models. For instance, background information on topic detection technology is found in Zhao, et al., "Topic Modelling Meets Deep Neural Networks: A Survey," arXiv:2103.00498v1 [cs.LG], February 28, 2021, 8 pages. Background information on named entity recognition is found in Kalyani Pakhalea, "Comprehensive Overview of Named Entity Recognition: Models, Domain-Specific Applications and Challenges," arXiv, arXiv:2309.14084v1 [cs.CL], September 25, 2023, 10 pages. Further, various machine-trained models are available from the Azure AI Vision library, provided by Microsoft Corporation of Redmond, Washington.

### G. Illustrative Processes

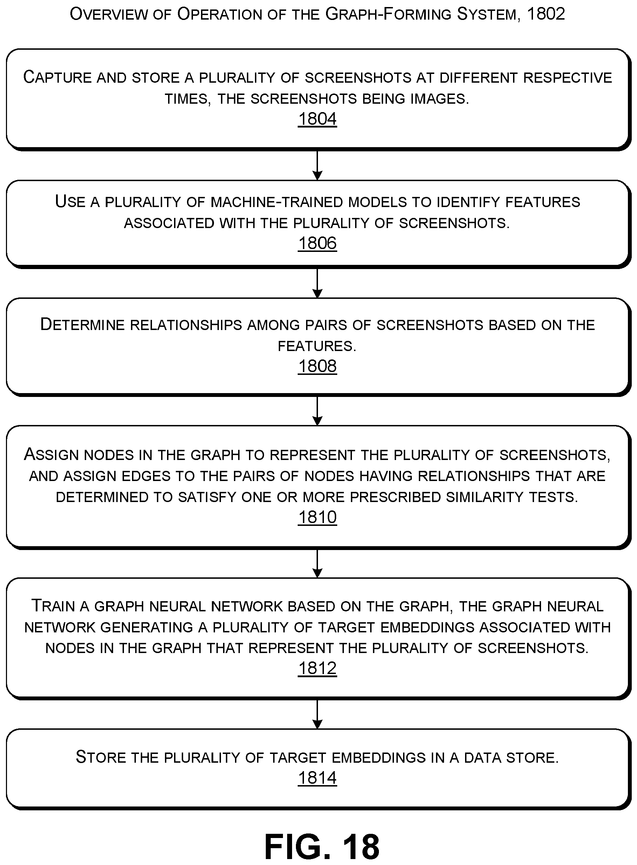

Figs. 18-20 show processes that represent an overview of the operation of the systems of Fig. 1. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 21 and 22.

Fig. 18 shows a process 1802 for generating a graph (e.g., the graph 104). The process 1802 includes: capturing and storing (e.g., in block 1804) a plurality of screenshots at different respective times, the screenshots being images; using (e.g., in block 1806) a plurality of machine-trained models (e.g., the models 118) to identify features associated with the plurality of screenshots; determining (e.g., in block 1808) relationships among pairs of screenshots based on the features; assigning (e.g., in block 1810) nodes in the graph to represent the plurality of screenshots, and assigning edges to the pairs of nodes having relationships that are determined to satisfy one or more prescribed similarity tests; training (e.g., in block 1812) a graph neural network (e.g., the GNN 108) based on the graph, the graph neural network generating a plurality of target embeddings associated with nodes in the graph that represent the plurality of screenshots; and storing (e.g., in block 1814) the plurality of target embeddings in a data store.

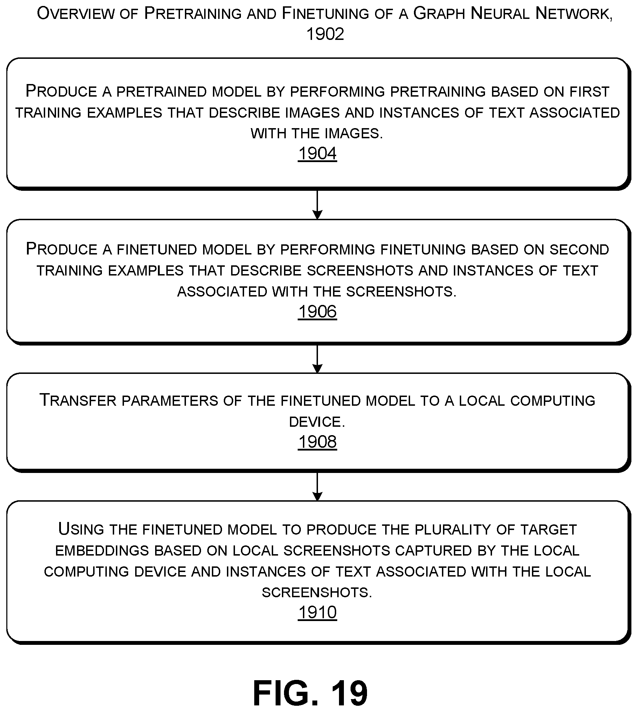

Fig. 19 shows a process 1902 that describes the distributed training shown in Fig. 9. The process 1902 includes: producing (e.g., in block 1904) a pretrained model (e.g., the pretrained model 904) by performing pretraining based on first training examples that describe images and instances of text associated with the images; producing (e.g., in block 1906) a finetuned model (e.g., the finetuned model 908) by performing finetuning based on second training examples that describe screenshots and instances of text associated with the screenshots; transferring (e.g., in block 1908) parameters of the finetuned model to a local computing device (e.g., the local computing device 912); and using (e.g., in block 1910) the finetuned model to produce the plurality of target embeddings based on local screenshots captured by the local computing device and instances of text associated with the local screenshots.

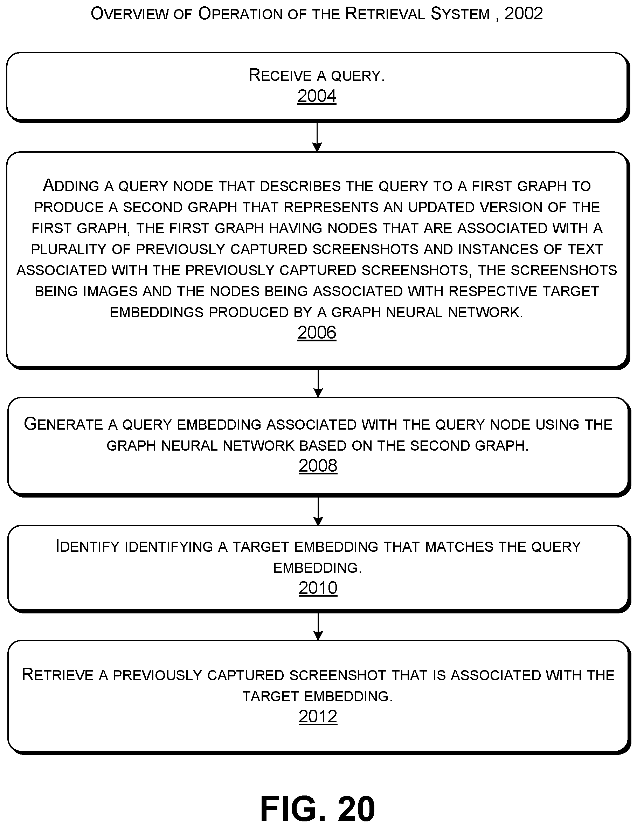

Fig. 20 shows a process 2002 for retrieving at least one previously captured screenshot. The process 2002 includes receiving (e.g., in block 2004) a query and adding (e.g., in block 2006) a query node that describes the query to a first graph to produce a second graph that represents an updated version of the first graph. The first graph has nodes that are associated with a plurality of previously captured screenshots and instances of text associated with the previously captured screenshots, the screenshots being images and the nodes being associated with respective target embeddings produced by a graph neural network (e.g., the GNN 108). The process 2002 also includes: generating (e.g., in block 2008) a query embedding associated with the query node using the graph neural network based on the second graph; identifying (e.g., in block 2010) a target embedding that matches the query embedding; and retrieving (e.g., in block 2012) a previously captured screenshot that is associated with the target embedding.

### H. Illustrative Computing Functionality

Fig. 21 shows computing equipment 2102 that, in some implementations, is used to implement any of the systems of Fig. 1. The computing equipment 2102 includes a set of local devices 2104 coupled to a set of servers 2106 via a computer network 2108. Each local device corresponds to any type of computing device, including any of a desktop computing device, a laptop computing device, a handheld computing device of any type (e.g., a smartphone or a tablet-type computing device), a mixed reality device, an intelligent appliance, a wearable computing device (e.g., a smart watch), an Internet-of-Things (IoT) device, a gaming system, an immersive "cave," a media device, a vehicle-borne computing system, any type of robot computing system, a computing system in a manufacturing system, etc. In some implementations, the computer network 2108 is implemented as a local area network, a wide area network (e.g., the Internet), one or more point-to-point links, or any combination thereof.

The bottom-most overlapping box in Fig. 21 indicates that systems of Fig. 1 are capable of being spread across the local devices 2104 and/or the servers 2106 in any manner. In one example, the servers 2106 perform the pretraining and finetuning shown in Fig. 9 and 19. The storage of local screenshots, the generation of local GNN embeddings based on the screenshots, and the retrieval operations are separately performed by each local device. This implementation may help reassure a user that the privacy of the local screenshots is being maintained. Other implementations vary the above allocation of operations in any manner. For example, another implementation stores encrypted screenshots that have been locally captured in a server-implemented data store. Alternatively, or in addition, the servers 2106 can implement any aspect of the retrieval operations.

Fig. 22 shows a computing system 2202 that, in some implementations, is used to implement any aspect of the mechanisms set forth in the above-described figures. For instance, in some implementations, the type of computing system 2202 shown in Fig. 22 is used to implement any local computing device or any server shown in Fig. 21. In all cases, the computing system 2202 represents a physical and tangible processing mechanism.

The computing system 2202 includes a processing system 2204 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 2202 also includes computer-readable storage media 2206, corresponding to one or more computer-readable media hardware units. The computer-readable storage media 2206 retains any kind of information 2208, such as machine-readable instructions, settings, model weights, and/or other data. In some implementations, the computer-readable storage media 2206 includes one or more solid-state devices, one or more hard disks, one or more optical disks, etc. Any instance of the computer-readable storage media 2206 represents a fixed or removable unit of the computing system 2202. Further, any instance of the computer-readable storage media 2206 provides volatile and/or non-volatile retention of information. The specific term "computer-readable storage medium" or "storage device" expressly excludes propagated signals per se; a computer-readable storage medium or storage device is "non-transitory" in this regard.

The computing system 2202 utilizes any instance of the computer-readable storage media 2206 in different ways. For example, in some implementations, any instance of the computer-readable storage media 2206 represents a hardware memory unit (such as random access memory (RAM)) for storing information during execution of a program by the computing system 2202, and/or a hardware storage unit (such as a hard disk) for retaining/archiving information on a more permanent basis. In the latter case, the computing system 2202 also includes one or more drive mechanisms 2210 (such as a hard drive mechanism) for storing and retrieving information from an instance of the computer-readable storage media 2206.

In some implementations, the computing system 2202 performs any of the functions described above when the processing system 2204 executes computer-readable instructions stored in any instance of the computer-readable storage media 2206. For instance, in some implementations, the computing system 2202 carries out computer-readable instructions to perform each block of the processes described with reference to Figs. 18-20. Fig. 22 generally indicates that hardware logic circuitry 2212 includes any combination of the processing system 2204 and the computer-readable storage media 2206.

In addition, or alternatively, the processing system 2204 includes one or more other configurable logic units that perform operations using a collection of logic gates, such as field-programmable gate arrays (FPGAs), etc. In these implementations, the processing system 2204 effectively incorporates a storage device that stores computer-readable instructions, insofar as the configurable logic units are configured to execute the instructions and therefore embody or store these instructions.

In some cases (e.g., in the case in which the computing system 2202 represents a user computing device), the computing system 2202 also includes an input/output interface 2214 for receiving various inputs (via input devices 2216), and for providing various outputs (via output devices 2218). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 2220 and an associated graphical user interface presentation (GUI) 2222. The display device 2220 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 2202 also includes one or more network interfaces 2224 for exchanging data with other devices via one or more communication conduits 2226. One or more communication buses 2228 communicatively couple the above-described units together.

The communication conduit(s) 2226 is implemented in any manner, e.g., by a local area computer network, a wide area computer network (e.g., the Internet), point-to-point connections, or any combination thereof. The communication conduit(s) 2226 include any combination of hardwired links, wireless links, routers, gateway functionality, name servers, etc., governed by any protocol or combination of protocols.

Fig. 22 shows the computing system 2202 as being composed of a discrete collection of separate units. In some cases, the collection of units corresponds to discrete hardware units provided in a computing device chassis having any form factor. Fig. 22 shows illustrative form factors in its bottom portion. In other cases, the computing system 2202 includes a hardware logic unit that integrates the functions of two or more of the units shown in Fig. 22. For instance, in some implementations, the computing system 2202 includes a system on a chip (SoC or SOC), corresponding to an integrated circuit that combines the functions of two or more of the units shown in Fig. 22.

The following summary provides a set of illustrative examples of the technology set forth herein.

(A1) According to one aspect, a method (e.g., the process 1802) is described for generating a graph (e.g., the graph). The method includes: capturing and storing (e.g., in block 1804) a plurality of screenshots at different respective times, the screenshots being images; using (e.g., in block 1806) a plurality of machine-trained models to identify features associated with the plurality of screenshots; determining (e.g., in block 1808) relationships among pairs of screenshots based on the features; assigning (e.g., in block 1810) nodes in the graph to represent the plurality of screenshots, and assigning edges to the pairs of nodes having relationships that are determined to satisfy one or more prescribed similarity tests; training (e.g., in block 1812) a graph neural network (e.g., the GNN 108) based on the graph, the graph neural network generating a plurality of target embeddings associated with nodes in the graph that represent the plurality of screenshots; and storing (e.g., in block 1814) the plurality of target embeddings in a data store (e.g., the data store 130).

(A2) According to some implementations of the method of A1, each node in the graph that describes a particular screenshot describes an entirety of contents presented on a user interface presentation at a particular time.

(A3) According to some implementations of the method of A1, each node in the graph that describes a particular screenshot describes a portion of an entirety of contents presented on a user interface presentation at a particular time, the portion being less than the entirety.

(A4) According to some implementations of any of the methods of A1-A3, the graph also includes nodes associated with instances of text, each instance of text being associated with at least one of the plurality of screenshots.

(A5) According to some implementations of any of the methods of A1-A4, the method further includes: identifying entities associated with screenshots based on the features; and linking the nodes associated with the screenshots to other nodes that represent the entities.

(A6) According to some implementations of any of the methods of A1-A5, the plurality of machine-trained models includes two or more of: a first machine-trained model that produces an image embedding based on image content of a particular screenshot; a second machine-trained model that produces a text embedding based on text content of the particular screenshot; a third machine-trained model that identifies a topic expressed by the particular screenshot; a fourth machine-trained model that identifies a named entity expressed by the particular screenshot; and/or a fifth machine-trained model that identifies an activity expressed by the particular screenshot.

(A7) According to some implementations of any of the methods of A1-A6, the assigning edges includes using a plurality of types of edges to represent a plurality of different relationships, wherein the plurality of different relationships includes any two or more of: common image content in two previously captured screenshots; common text content in the two previously captured screenshots; a common occurrence of at least one topic in the two previously captured screenshots; a common occurrence of at least one named entity in the two previously screenshots; and/or a common activity associated with the two previously captured screenshots.

(A8) According to some implementations of any of the methods of A1-A7, the graph neural network has parameters that are trained by: producing a pretrained model by performing pretraining based on first training examples that describe images and instances of text associated with the images; and producing a finetuned model by performing finetuning based on second training examples that describe screenshots and instances of text associated with the screenshots. The graph neural network is the finetuned model.

(A9) According to some implementations of the method of A8, the pretraining uses supervised learning by: masking nodes in a graph that describes the first training examples, to produce masked nodes; predicting identities of the masked nodes using the pretrained model; generating loss information based an extent to which the predicted identities of the masked nodes accurately match actual identities of the mask modes; and updating parameters of the pretrained model based on the loss information.

(A10) According to some implementations the methods of A8 or A9, the producing a pretrained model and producing the finetuned model are performed on a network-accessible computing system. The method further includes: transferring parameters of the finetuned model to a local computing device; and using the finetuned model to produce the plurality of target embeddings based on local screenshots captured by the local computing device and instances of text associated with the local screenshots.

(A11) According to some implementations of any of the methods of A1-A10, the graph neural network is a graph attention network.

(A12) According to some implementations of any of the methods of A1-A11, the graph is a first graph, and wherein the method further includes using the first graph to perform a retrieval operation by: adding a query node that describes the query to the first graph to produce a second graph that represents an updated version of the first graph; generating a query embedding using the graph neural network based on the second graph; identifying a target embedding associated with the query node that matches the query embedding; and retrieving a previously captured screenshot that is associated with the target embedding.

(A13) According to some implementations of the methods of A12, the adding the query node includes: using the plurality of machine-trained models to identify query features of the query; and using the query features to identify one or more links that connect the query node to one or more other nodes in the first graph; and adding one or more edges to the first graph associated with the one or more links.

(B1) According to another aspect, a method (e.g., the process 2002) is described for accessing screenshot information. The method includes: receiving (e.g., in block 2004) a query; adding (e.g., in block 2006) a query node that describes the query to a first graph to produce a second graph that represents an updated version of the first graph. The first graph has nodes that are associated with a plurality of previously captured screenshots and instances of text associated with the previously captured screenshots, the screenshots being images and the nodes being associated with respective target embeddings produced by a graph neural network. The method further includes: generating (e.g., in block 2008) a query embedding associated with the query node using the graph neural network based on the second graph; identifying (e.g., in block 2010) a target embedding that matches the query embedding; and retrieving (e.g., in block 2012) a previously captured screenshot that is associated with the target embedding.

In yet another aspect, some implementations of the technology described herein include a computing system (e.g., the computing system 2202) that includes a processing system (e.g., the processing system 2204) having a processor. The computing system also includes a storage device (e.g., the computer-readable storage media 2206) for storing computer-readable instructions (e.g., the information 2208). The processing system executes the computer-readable instructions to perform any of the methods described herein (e.g., any individual method of the methods of A1-A13 and B1).

In yet another aspect, some implementations of the technology described herein include a computer-readable storage medium (e.g., the computer-readable storage media 2206) for storing computer-readable instructions (e.g., the information 2208). A processing system (e.g., the processing system 2204) executes the computer-readable instructions to perform any of the operations described herein (e.g., the operations in any individual method of the methods of A1-A13 and B1).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 2212 of Fig. 22. The term "logic" likewise encompasses various physical and tangible mechanisms for performing a task. For instance, each processing-related operation illustrated in the flowcharts of Figs. 18-20 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method for generating a graph, comprising:

   capturing and storing a plurality of screenshots at different respective times, the screenshots being images;
   using a plurality of machine-trained models to identify features associated with the plurality of screenshots;
   determining relationships among pairs of screenshots based on the features;
   assigning nodes in the graph to represent the plurality of screenshots, and assigning edges to the pairs of nodes having relationships that are determined to satisfy one or more prescribed similarity tests;
   training a graph neural network based on the graph, the graph neural network generating a plurality of target embeddings associated with nodes in the graph that represent the plurality of screenshots; and
   storing the plurality of target embeddings in a data store.

2. The method of claim 1, wherein each node in the graph that describes a particular screenshot describes:

   an entirety of contents presented on a user interface presentation at a particular time; or
   a portion of an entirety of contents presented on a user interface presentation at a particular time, the portion being less than the entirety.

3. The method of claim 1, wherein the graph also includes nodes associated with instances of text, each instance of text being associated with at least one of the plurality of screenshots.

4. The method of claim 1, wherein the method further includes:

   identifying entities associated with screenshots based on the features; and
   linking the nodes associated with the screenshots to other nodes that represent the entities.

5. The method of claim 1, wherein the plurality of machine-trained models includes two or more of:

   a first machine-trained model that produces an image embedding based on image content of a particular screenshot;
a second machine-trained model that produces a text embedding based on text content of the particular screenshot;
a third machine-trained model that identifies a topic expressed by the particular screenshot;
a fourth machine-trained model that identifies a named entity expressed by the particular screenshot; and/or
a fifth machine-trained model that identifies an activity expressed by the particular screenshot.

6. The method of claim 1, where the assigning edges includes using a plurality of types of edges to represent a plurality of different relationships, wherein the plurality of different relationships includes any two or more of:

common image content in two previously captured screenshots;
common text content in the two previously captured screenshots;
a common occurrence of at least one topic in the two previously captured screenshots;
a common occurrence of at least one named entity in the two previously screenshots; and/or
a common activity associated with the two previously captured screenshots.

7. The method of claim 1, wherein the graph neural network has parameters that are trained by:

producing a pretrained model by performing pretraining based on first training examples that describe images and instances of text associated with the images; and
producing a finetuned model by performing finetuning based on second training examples that describe screenshots and instances of text associated with the screenshots,
wherein the graph neural network is the finetuned model.

8. The method of claim 7, wherein the pretraining uses supervised learning by:

masking nodes in a graph that describes the first training examples, to produce masked nodes;
predicting identities of the masked nodes using the pretrained model;
generating loss information based an extent to which the predicted identities of the masked nodes accurately match actual identities of the mask modes; and
updating parameters of the pretrained model based on the loss information.

9. The method of claim 7,

wherein the producing a pretrained model and producing the finetuned model are performed on a network-accessible computing system, and
wherein the method further includes:

transferring parameters of the finetuned model to a local computing device; and
using the finetuned model to produce the plurality of target embeddings based on local screenshots captured by the local computing device and instances of text associated with the local screenshots.

10. The method of claim 1, wherein the graph neural network is a graph attention network.

11. The method of claim 1, wherein the graph is a first graph, and wherein the method further includes using the first graph to perform a retrieval operation by:

adding a query node that describes the query to the first graph to produce a second graph that represents an updated version of the first graph;
generating a query embedding using the graph neural network based on the second graph;
identifying a target embedding associated with the query node that matches the query embedding; and
retrieving a previously captured screenshot that is associated with the target embedding.

12. The method of claim 11, wherein the adding the query node comprises:

using the plurality of machine-trained models to identify query features of the query; and
using the query features to identify one or more links that connect the query node to one or more other nodes in the first graph; and

adding one or more edges to the first graph associated with the one or more links.

**13.** A computing system for accessing screenshot information, comprising:

an instruction data store for storing computer-readable instructions; and
a processing system for executing the computer-readable instructions in the data store, to perform operations including:

receiving a query;
adding a query node that describes the query to a first graph to produce a second graph that represents an updated version of the first graph,
the first graph having nodes that are associated with a plurality of previously captured screenshots and instances of text associated with the previously captured screenshots, the screenshots being images and the nodes being associated with respective target embeddings produced by a graph neural network;
generating a query embedding associated with the query node using the graph neural network based on the second graph;
identifying a target embedding that matches the query embedding; and
retrieving a previously captured screenshot that is associated with the target embedding.

**14.** The computing system of claim 13, wherein the previously captured screenshot is associated with a target node in the second graph, and wherein the operations further include identifying neighbor nodes of the target node and retrieving information regarding one or more other screenshots that are associated with the neighbor nodes.

**15.** A computer-readable storage medium for storing computer-readable instructions, a processing system executing the computer-readable instructions to perform operations, the operations comprising each of:

using a plurality of machine-trained models to identify features associated with a plurality of screenshots, the screenshots being images;
determining relationships among pairs of screenshots based on the features;
assigning nodes in a graph to represent the plurality of screenshots, and assigning edges to the pairs of nodes having relationships that are determined to satisfy one or more prescribed similarity tests;
training a graph neural network based on the graph, the graph neural network generating a plurality of target embeddings that represent the plurality of screenshots captured by a local computing device; and
storing the plurality of target embeddings in a data store.

**FIG. 1**

114 — IMAGES (E.G., SCREENSHOTS) AND ASSOCIATED INSTANCES OF TEXT

TEXT

IMAGES

GRAPH-FORMING SYSTEM 110

IMAGE REGION(S)

TEXT REGION(S)

PARTITIONING MODEL 116

MACHINE-TRAINED MODELS 118

FEATURES — 120

EDGE-DETERMINING COMPONENT 122

GRAPH GENERATING COMPONENT 124

ORIGINAL GRAPH 104 — 126

GRAPH-GENERATING SYSTEM 102

GNN-GENERATING COMPONENT 128

GRAPH NEURAL NETWORK (GNN) 108

TRAINED TARGET EMBEDDINGS ASSOCIATED WITH NODES — 130

GNN-TRAINING SYSTEM 106

QUERY

EMBEDDING-GENERATING COMPONENT 132

EMBEDDING-MATCHING COMPONENT 134

RETRIEVAL SYSTEM 112

MATCHING SCREENSHOT(S)

LOCAL COMPUTING DEVICE
204

SCREENSHOT
CAPTURE
COMPONENT
202

206

t1
t2
t3  APP A2232
...
SCREEN-
SHOTS 102

**FIG. 2**

A PARTICULAR
SCREENSHOT
302

IMAGE
REGION(S)
304 → SELECTED IMAGE
REGIONS

TEXT
REGION(S) → OCR → EXTRACTED → CONCAT-
306         TEXT      ENATED
                      TEXT

NEW
NODE

n

e  INITIAL
EMBEDDING

FEATURES ←

TEXT-PROCESSING MODELS ←

IMAGE-PROCESSING MODELS ←

**FIG. 3**

USER INTERFACE
PRESENTATION 402

VIDEOCONF. APP  ☐☐☐

TEXT

408

EMAIL APP  ☐☐☐

TEXT
REGION 1

TEXT
REGION 2

406

TOOLBAR REGION 404

**FIG. 4**

FIG. 5

MACHINE-TRAINED
MODELS 118

KEY

○ → NODE REPRESENTING IMAGE SCREENSHOT (OR APP OF ACTIVE WINDOW)
✩ → NODE REPRESENTING INPUT TEXT

(i-i) → IMAGE-SIMILARITY BETWEEN IMAGE SCREENSHOTS
(t-t) → TEXT-SIMILARITY BETWEEN IMAGE SCREENSHOTS
(act-sim) → ACTIVITY SIMILARITY BETWEEN IMAGE SCREENSHOTS
(top-sim) → TOPIC SIMILARITY BETWEEN IMAGE SCREENSHOTS
(ner-sim) → NER SIMILARITY BETWEEN IMAGE SCREENSHOTS
(i-t) → INPUT TEXT TO IMAGE SCREENSHOT SIMILARITY

⋮

602

FIG. 6

## GNN-GENERATING COMPONENT 128

| NEIGHBOR-IDENTIFYING COMPONENT 702 | → | CONTRIBUTION-ACCUMULATING COMPONENT 704 | → | NODE-UPDATING COMPONENT 706 |

GNN 108

PARA-METERS θ 714

| POST-PROCESSING COMPONENT 708 | → | LOST-GENERATING COMPONENT 710 | → | PARAMETER-UPDATING COMPONENT 712 |

## FIG. 7

TRAINING EXAMPLE

802

**(8.1)** IDENTIFY NEIGHBORS: (n2, n3, n4, n5)

**(8.2)** ACCUMULATE CONTRIBUTIONS: (e2←n2, e3←n3, e4←n4, e5 ←n5)

**(8.3)** UPDATE NODE EMBEDDING: (e1$_{updated}$ ← GNN$_θ$(e1, e2, e3, e4, e5))

**(8.4)** GENERATE POST-PROCESSING RESULT: (R$_{model}$ ← F(e1$_{updated}$))

**(8.5)** COMPUTE LOSS: (L ← Loss(R$_{model}$, R$_{ground-truth}$))

**(8.6)** UPDATE PARAMETERS: (θ ← Update(θ$_{prior}$, L))

## FIG. 8

GENERAL IMAGE-TEXT PAIRS

GENERAL SCREENSHOT-TEXT PAIRS

LOCAL SCREENSHOT-TEXT PAIRS

GRAPH-GENERATING COMPONENT 108

PRETRAINING GRAPH

FINE-TRAINING GRAPH

LOCAL COMPUTING DEVICE 912

LOCAL GRAPH

PRETRAINING COMPONENT 902

FINETUNING COMPONENT 906

LOCALIZING COMPONENT 916

PRETRAINED MODEL 904

FINETUNED MODEL 908 (GNN MODEL 108)

914

LOCAL GNN EMBEDDINGS

NETWORK-ACCESSIBLE COMPUTING SYSTEM 910

OTHER LOCAL COMPUTING DEVICES

FIG. 9

26

PRETRAINING EXAMPLE

1002

**(10.1)** UPDATE NODE EMBEDDING: $(e1_{updated} \leftarrow GNN_\theta(e1_{mask}, e2, e3, e4, e5))$

**(10.2)** GENERATE PREDICTION: $(e1_{pred} \leftarrow F(e1_{updated}))$

**(10.3)** COMPUTE LOSS: $(L \leftarrow Loss(e1_{actual}, e1_{pred}))$

**(10.4)** UPDATE PARAMETERS: $(\theta \leftarrow Update(\theta_{prior}, L))$

# FIG. 10

FIG. 11

**FIG. 12**

ORIGINAL GRAPH 104

RETRIEVAL EXAMPLE

1302

(12.1)

QUERY

(12.2) UPDATE QUERY EMBEDDING: $(e6_{updated} \leftarrow GNN_\theta(e6, e1, e2, e5))$

(12.3) FIND MATCH

(12.4) RETRIEVE SCREENSHOT

1304

# FIG. 13

TRANSFORMER-
BASED LANGUAGE
MODEL

1402 —→

POST-PROCESSING COMPONENT (E.G.,
CLASSIFICATION COMPONENT) 1426

OUTPUT INFORMATION 1424

NTH TRANSFORMER COMPONENT 1422

⋮

SECOND TRANSFORMER COMPONENT 1420

1418

ADD & NORMALIZE COMPONENT 2
1414

FFN COMPONENT
1413

ADD & NORMALIZE COMPONENT 1
1410

ATTENTION HEAD 1
1416

ATTENTION
COMPONENT
1408

FIRST TRANSFORMER
COMPONENT 1404

1406 {  ⋯ 

**FIG. 14**

1502 ⟍

CLASSIFICATION
COMPONENT
1514

OTHER RESIDUAL BLOCKS 1506

⋮

(+)

CONVOLUTIONAL
COMPONENT 1510

1512

CONVOLUTIONAL
COMPONENT 1508

ENCODER BLOCK 1504

KERNEL

**FIG. 15**

116 ⟍

TEXT
REGION(S)

IMAGE
REGION(S)

REGION-IDENTIFYING
COMPONENT
1604

BASE CNN 1602

**FIG. 16**

1702

**FIG. 17**

OVERVIEW OF OPERATION OF THE GRAPH-FORMING SYSTEM, 1802

CAPTURE AND STORE A PLURALITY OF SCREENSHOTS AT DIFFERENT RESPECTIVE TIMES, THE SCREENSHOTS BEING IMAGES.
1804

USE A PLURALITY OF MACHINE-TRAINED MODELS TO IDENTIFY FEATURES ASSOCIATED WITH THE PLURALITY OF SCREENSHOTS.
1806

DETERMINE RELATIONSHIPS AMONG PAIRS OF SCREENSHOTS BASED ON THE FEATURES.
1808

ASSIGN NODES IN THE GRAPH TO REPRESENT THE PLURALITY OF SCREENSHOTS, AND ASSIGN EDGES TO THE PAIRS OF NODES HAVING RELATIONSHIPS THAT ARE DETERMINED TO SATISFY ONE OR MORE PRESCRIBED SIMILARITY TESTS.
1810

TRAIN A GRAPH NEURAL NETWORK BASED ON THE GRAPH, THE GRAPH NEURAL NETWORK GENERATING A PLURALITY OF TARGET EMBEDDINGS ASSOCIATED WITH NODES IN THE GRAPH THAT REPRESENT THE PLURALITY OF SCREENSHOTS.
1812

STORE THE PLURALITY OF TARGET EMBEDDINGS IN A DATA STORE.
1814

# FIG. 18

OVERVIEW OF PRETRAINING AND FINETUNING OF A GRAPH NEURAL NETWORK,
1902

PRODUCE A PRETRAINED MODEL BY PERFORMING PRETRAINING BASED ON FIRST
TRAINING EXAMPLES THAT DESCRIBE IMAGES AND INSTANCES OF TEXT ASSOCIATED
WITH THE IMAGES.
1904

PRODUCE A FINETUNED MODEL BY PERFORMING FINETUNING BASED ON SECOND
TRAINING EXAMPLES THAT DESCRIBE SCREENSHOTS AND INSTANCES OF TEXT
ASSOCIATED WITH THE SCREENSHOTS.
1906

TRANSFER PARAMETERS OF THE FINETUNED MODEL TO A LOCAL COMPUTING
DEVICE.
1908

USING THE FINETUNED MODEL TO PRODUCE THE PLURALITY OF TARGET
EMBEDDINGS BASED ON LOCAL SCREENSHOTS CAPTURED BY THE LOCAL
COMPUTING DEVICE AND INSTANCES OF TEXT ASSOCIATED WITH THE LOCAL
SCREENSHOTS.
1910

# FIG. 19

Overview of Operation of the Retrieval System , 2002

RECEIVE A QUERY.
2004

ADDING A QUERY NODE THAT DESCRIBES THE QUERY TO A FIRST GRAPH TO PRODUCE A SECOND GRAPH THAT REPRESENTS AN UPDATED VERSION OF THE FIRST GRAPH, THE FIRST GRAPH HAVING NODES THAT ARE ASSOCIATED WITH A PLURALITY OF PREVIOUSLY CAPTURED SCREENSHOTS AND INSTANCES OF TEXT ASSOCIATED WITH THE PREVIOUSLY CAPTURED SCREENSHOTS, THE SCREENSHOTS BEING IMAGES AND THE NODES BEING ASSOCIATED WITH RESPECTIVE TARGET EMBEDDINGS PRODUCED BY A GRAPH NEURAL NETWORK.
2006

GENERATE A QUERY EMBEDDING ASSOCIATED WITH THE QUERY NODE USING THE GRAPH NEURAL NETWORK BASED ON THE SECOND GRAPH.
2008

IDENTIFY IDENTIFYING A TARGET EMBEDDING THAT MATCHES THE QUERY EMBEDDING.
2010

RETRIEVE A PREVIOUSLY CAPTURED SCREENSHOT THAT IS ASSOCIATED WITH THE TARGET EMBEDDING.
2012

FIG. 20

2104

2106

LOCAL DEVICE

COMPUTER NETWORK
2108

SERVER

GRAPH-FORMING SYSTEM 110,
RETRIEVAL SYSTEM 112

2102

# FIG. 21

OUTPUT
DEVICE(S) 2218

HARDWARE LOGIC CIRCUITRY
2212

DISPLAY DEVICE
2220

GUI
2222

PROCESSING SYSTEM
2204
(INCLUDING ANY OF
CPU(S), GPU(S),
ASIC(S), CONFIGURABLE
LOGIC UNIT(S), ETC.)

COMMUN-
ICATION
CONDUIT(S)
2226

I/O
2214

2228

NETWORK
INTER-
FACE(S)
2224

INPUT
DEVICE(S)
2216

COMPUTER-READABLE
STORAGE MEDIA, E.G.,
2206

INSTRUCTIONS,
DATA,
SETTINGS, ETC.
2208

DRIVE
MECHANISMS
2210

2202

COMPUTING SYSTEM

FOR
EXAMPLE:

GAME

"CAVE"

SERVER

• • •

# FIG. 22

## EUROPEAN SEARCH REPORT

**Application Number**

EP 25 18 2453

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/230255 A1 (WANG JINGDONG [CN] ET AL) 5 September 2013 (2013-09-05) * paragraphs [0022], [0025], [0037], [0038], [0042], [0059]; figures 1, 8 * ----- | 1-15 | INV. G06F16/22 G06F16/51 |

**TECHNICAL FIELDS SEARCHED (IPC)**

G06F

The present search report has been drawn up for all claims

| Place of search | Date of completion of the search | Examiner |
|---|---|---|
| The Hague | 6 October 2025 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 2453

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | Publication date |
|---|---|---|---|
| US 2013230255 A1 | 05-09-2013 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEVLIN et al.** BERT: Pretraining of Deep Bidirectional Transformers for Language Understanding. *arXiv, arXiv:1810.04805v2 [cs.CL*, 24 May 2019, 16
- **DOSOVITSKIY et al.** An Image is Worth 16x16 Words: Transformers for Image Recognition at Scale. *arXiv, arXiv:2010.11929v2 [cs.CV*, 03 June 2021, 22
- **VASWANI et al.** Attention Is All You Need. *31st Conference on Neural Information Processing Systems (NIPS 2017)*, 2017, 11
- **HE et al.** Deep Residual Learning for Image Recognition. *arXiv, arXiv:1512.03385v1 [cs.CV*, 10 December 2015, 10

- **YUAN et al.** Florence: A New Foundation Model for Computer Vision. *arXiv, arXiv:2111.11432v1 [cs.CV*, November 2021, 17
- **REDMON et al.** You Only Look Once: Unified, Real-Time Object Detection. *arXiv:1506.02640v5 [cs.CV*, 09 May 2016, 10
- **ZHAO et al.** Topic Modelling Meets Deep Neural Networks: A Survey. *arXiv:2103.00498v1 [cs.LG*, 28 February 2021, 8
- **KALYANI PAKHALEA**. Comprehensive Overview of Named Entity Recognition: Models, Domain-Specific Applications and Challenges. *arXiv, arXiv:2309.14084v1 [cs.CL*, 25 September 2023, 10